(19) Europäisches Patentamt
European Patent Office
Office européen des brevets

(11) EP 3 348 626 B1

(12) # FASCICULE DE BREVET EUROPEEN

(45) Date de publication et mention de la délivrance du brevet:
**10.07.2019 Bulletin 2019/28**

(21) Numéro de dépôt: **18158906.0**

(22) Date de dépôt: **20.12.2011**

(51) Int Cl.:
*C10L 1/10* (2006.01) *C10L 10/06* (2006.01)
*C10L 1/12* (2006.01) *C10L 1/222* (2006.01)
*C10L 1/238* (2006.01) *B01J 13/00* (2006.01)
*C10L 10/18* (2006.01) *C10L 1/16* (2006.01)
*C10L 1/188* (2006.01) *C10L 1/198* (2006.01)
*C10L 1/2383* (2006.01) *C10L 1/2387* (2006.01)
*C10L 10/04* (2006.01)

(54) **UTILISATION D'UNE COMPOSITION D'ADDITIF CARBURANT À BASE D'UNE DISPERSION DE PARTICULES DE FER ET D'UN DÉTERGENT**

VERWENDUNG VON EINER ZUSAMMENSETZUNG EINES KRAFTSTOFFZUSATZES AUF DER BASIS EINER DISPERSION AUS EISENPARTIKELN UND EINEM REINIGUNGSMITTEL

USE OF A FUEL ADDITIVE COMPOSITION BASED ON A DISPERSION OF PARTICLES OF IRON AND A DETERGENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2010 FR 1061065**

(43) Date de publication de la demande:
**18.07.2018 Bulletin 2018/29**

(62) Numéro(s) de document de la (des) demande(s) initiale(s) en application de l'article 76 CBE:
**11802920.6 / 2 655 575**

(73) Titulaires:
- **RHODIA OPERATIONS**
  **75009 Paris (FR)**
- **The Lubrizol Corporation**
  **Wickliffe, OH 44092-2298 (US)**

(72) Inventeurs:
- **D'ALENCON, Lauriane**
  **75014 PARIS (FR)**
- **LALLEMAND, Michael**
  **93200 SAINT DENIS (FR)**
- **HARLE, Virginie**
  **60300 SENLIS (FR)**
- **MORETON, David J.**
  **Belper, Derbyshire DE56 1QN (GB)**
- **MACDUFF, Malcolm G.J.**
  **Belper, Derbyshire DE56 1QN (GB)**
- **PUDLARZ, Magali**
  **Belper, Derbyshire DE56 1QN (GB)**

(74) Mandataire: **Lavoix**
**2, place d'Estienne d'Orves**
**75441 Paris Cedex 09 (FR)**

(56) Documents cités:
**WO-A1-97/19022** **WO-A1-2008/116550**
**WO-A1-2008/116552** **WO-A1-2009/140190**
**WO-A1-2010/150040** **WO-A2-2006/135881**
**FR-A1- 2 797 199** **FR-A1- 2 833 862**
**FR-A1- 2 860 443** **US-A1- 2007 180 760**
**US-A1- 2010 242 342**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 348 626 B1

## Description

La présente invention concerne l'association d'une dispersion organique de particules de fer et d'un détergent au sein d'une composition notamment utile comme additif carburant pour moteurs à combustion interne.

Lors de la combustion de carburant, notamment de gazole, dans un moteur, les produits carbonés ont tendance à former des particules carbonées, qu'on désignera dans la suite de la description sous l'expression de "suies", qui sont réputées nocives tant pour l'environnement que pour la santé. On recherche depuis longtemps des techniques qui permettent de réduire l'émission de ces suies.

Une solution satisfaisante consiste à introduire dans la ligne d'échappement un filtre à particules (ou FAP dans la suite du texte) qui va bloquer les suies dans ses canaux pour laisser échapper un gaz exempt de suies. Lorsqu'une certaine quantité de suies accumulées dans le FAP est atteinte, les suies sont brûlées pour libérer les canaux du FAP. Cette étape de régénération du FAP se fait habituellement à des températures supérieures à la température du gaz pendant une marche normale du moteur, les suies brûlant usuellement sous air à des températures supérieures à 650°C.

Afin d'aider à la régénération du FAP, on emploie généralement un catalyseur qui a pour but de faciliter l'oxydation des suies directement ou indirectement. On entend par faciliter l'oxydation des suies le fait de permettre leur oxydation à plus basse température de façon à ce que cette température soit plus fréquemment atteinte pendant une marche normale du moteur. Une partie des suies peut ainsi être brûlée en continu pendant le fonctionnement du moteur.

Le catalyseur permet aussi d'abaisser la température requise pour régénérer le FAP afin que la température de régénération soit inférieure à la température de combustion des suies sans la présence du dit catalyseur. Le catalyseur permet également d'accélérer la vitesse d'oxydation des suies, ce qui permet de réduire la durée nécessaire à la régénération du FAP.

L'utilisation d'un additif d'aide à la régénération du FAP, vectorisé par le carburant alimentant le moteur ou encore Fuel Borne Catalyst (FBC), s'est avéré répondre à de nombreux critères puisqu'il permet de régénérer le FAP plus rapidement et à plus basse température que la technologie concurrente appelée Catalysed Soot Filter (CSF, le catalyseur étant immobilisé dans le FAP), ce qui contribue à réduire la consommation en carburant pour la régénération du FAP (et ainsi réduire les émissions de $CO_2$).

Les nouvelles technologies moteur, comme les moteurs diesel à système common-rail et injection directe haute pression de carburant, sont performantes mais toutefois sensibles à la qualité du carburant. Il est notamment connu que des dépôts peuvent se former notamment dans les injecteurs des moteurs diesel au cours de leur fonctionnement. La quantité de dépôt et leur vitesse de formation dépendent de la qualité du carburant utilisé dans le moteur mais aussi de la nature des additifs carburants présents dans celui-ci.

On entend ici par « additif carburant » tout additif permettant l'amélioration de la distribution du carburant dans le moteur et/ou l'amélioration des performances de fonctionnement du moteur et/ou l'amélioration de la stabilité du fonctionnement du moteur dans le temps. Les carburants qui contiennent des composants instables, comme les esters méthyliques d'acides gras généralement présents dans les biocarburants, ont tendance à former plus de dépôt que les carburants minéraux n'en contenant pas.

De plus, la présence de certains métaux dans les carburants comme le cuivre ou le zinc peuvent conduire à des quantités de dépôt accrues et ainsi des niveaux d'encrassement des injecteurs exacerbés. Les métaux présents dans les carburants proviennent de différentes origines comme du carburant et du réseau de distribution du carburant ou de toute autre contamination. Des métaux peuvent aussi être délibérément introduits dans le carburant comme dans le cas des additifs métalliques d'aide à la régénération du FAP. Même si ces additifs sont bénéfiques pour la régénération du FAP et sont ainsi souhaitables, certains peuvent promouvoir la formation de dépôt dans le circuit carburant et tout particulièrement dans les injecteurs carburant.

Les dépôts peuvent conduire à une perte de puissance du moteur et peuvent éventuellement aller jusqu'à endommager le moteur. Ces dépôts peuvent aussi dégrader la qualité de la combustion dans les cylindres et conduire à une augmentation des émissions polluantes et de la consommation du moteur en carburant. Il est connu que les additifs détergent réduisent ou éliminent la formation de dépôt dans les injecteurs.

Parmi les additifs carburant d'aide à la régénération du FAP, les dispersions de terres rares, notamment à base de cérium, et/ou de fer sont connues pour être efficaces pour la régénération du FAP et contribuent à la réduction de la température d'oxydation des suies. Ces dispersions doivent présenter une bonne dispersibilité dans le carburant dans lequel elles sont introduites, une stabilité élevée dans le temps et une activité catalytique suffisante à une concentration relativement peu élevée.

Les dispersions connues à ce jour ne satisfont pas toujours à tous ces critères. Elles peuvent présenter par exemple une bonne dispersibilité mais une stabilité insuffisante, notamment lorsqu'elles sont introduites dans des carburants contenant des esters méthyliques d'acides gras ou autre carburant d'origine végétale facilement oxydable. Ces dispersions peuvent être suffisamment stables mais présenter une activité catalytique à des concentrations en métal trop élevées pour qu'elles soient économiquement intéressantes. Par ailleurs comme indiqué précédemment, toutes ces dispersions doivent avoir un impact limité sur le fonctionnement des injecteurs carburants, notamment conduire à

un encrassement limité de ceux-ci, même en présence d'un carburant contenant du biocarburant ou encore un carburant contenant des métaux. De plus, la présence d'un FBC dans le carburant peut conduire à réduire la résistance du carburant à l'oxydation, notamment lorsqu'il contient des biocarburants.

Le document WO2008/116552 A1 divulgue l'utilisation d'une composition comprenant une dispersion à titre d'additif de carburant pour moteurs à combustion interne pour l'aide à la régénération d'un FAP, ladite dispersion comprenant : des objets solides dispersés dans la phase organique, sous forme de particules individualisées ou d'agrégats de particules, constitués d'un composé du fer sous forme cristallisée.

Le document WO2009/140190 A1 divulgue des dispersions contenant un sel quaternaire et des compositions de carburant contenant ces dispersions; ces dispersions améliorent la performance des moteurs, brûleurs et tout autre système utilisant un carburant, en permettant le contrôle de dépôts, l'amélioration de la combustion et le contrôle des déchets ou de la pollution générés par la combustion du carburant.

On cherche donc à fournir des compositions comprenant un additif d'aide à la régénération du FAP avec une bonne stabilité et qui conduisent à un faible encrassement des injecteurs et une réduction limitée de la résistance à l'oxydation du carburant, notamment en présence de biocarburant.

On cherche de préférence à fournir des compositions comprenant un additif présentant une activité catalytique suffisante à une concentration relativement peu élevée.

Un but de l'invention est de fournir une composition bien adaptée à ce type d'utilisation.

Dans ce but, l'invention propose une composition contenant un additif d'aide à la régénération du FAP sous la forme d'une dispersion organique de particules de fer sous forme cristallisée et d'un détergent comprenant un sel d'ammonium quaternaire.

La dispersion comprend des particules d'un composé du fer sous forme cristallisée de petite taille et au moins un agent amphiphile.

Dans certains cas, le détergent peut en outre inclure un détergent oxygéné.

L'invention fournit également un carburant additivé comprenant un carburant et la composition précédemment décrite.

Plus précisément, l'invention concerne une composition comprenant une dispersion et un détergent comprenant un sel d'ammonium quaternaire, ladite dispersion comprenant :

- une phase organique ;
- au moins un agent amphiphile, et
- des objets solides dispersés dans la phase organique, sous forme de particules individualisées ou d'agrégats de particules, constitués d'un composé du fer sous forme cristallisée, tels que lesdites particules présentent une taille moyenne $\overline{D}_{DRX}$ inférieure ou égale à 12 nm mesurée par diffraction des rayons X (DRX).

<u>La dispersion organique</u>

La dispersion de la composition selon l'invention peut être préparée selon un procédé comportant les étapes suivantes :

a) mise en contact, en phase aqueuse, d'une base et d'un mélange comprenant un sel de Fe(II) et un sel de Fe(III), selon un rapport molaire Fe(II)/Fe(III) compris de 0,45 à 0,55, de préférence environ égal à 0,5, avantageusement égal à 0,5, en maintenant le pH de la phase aqueuse à une valeur de pH supérieure à 8, ce par quoi on obtient un précipité ; et

b) mise en contact du précipité ainsi obtenu, éventuellement séparé de la phase aqueuse, avec une phase organique, en présence d'un agent amphiphile, ce par quoi on obtient la dispersion en phase organique.

Les objets solides dispersés dans les dispersions de l'invention sont des particules solides individualisées ou des agrégats de telles particules. Cesdites particules peuvent, en outre, éventuellement contenir des quantités résiduelles d'ions liés ou adsorbés tels que par exemple des ions sodium ou des ions ammonium.

La dispersion de la composition de l'invention présente l'avantage d'être très stable. Les particules de la dispersion de l'invention ne sédimentent pas, et les dispersions ne décantent pas, même après plusieurs mois. En outre, elle peut présenter une bonne compatibilité avec les carburants de type gazole, notamment à base de biocarburants.

Selon une variante préférée, elle peut présenter en outre une activité catalytique élevée.

La dispersion de la composition de l'invention est une dispersion en phase organique.

A cet effet, le plus souvent, la phase organique est constituée d'au moins 80%, de préférence au moins 90%, de préférence au moins 95% en masse d'un solvant organique ou d'un mélange de solvants organiques, par rapport à la masse totale de la phase organique.

La phase organique est éventuellement constituée uniquement d'un solvant organique ou d'un mélange de solvant organiques.

Cette phase organique est choisie notamment en fonction de l'utilisation de la dispersion.

A titre d'exemple de phase organique, on peut citer les hydrocarbures aliphatiques comme l'hexane, l'heptane, l'octane, le nonane, les hydrocarbures cycloaliphatiques tels que le cyclohexane, le cyclopentane, le cycloheptane, les hydrocarbures aromatiques tels que le benzène, le toluène, l'éthylbenzène, les xylènes, les naphtènes liquides. Conviennent également les coupes pétrolières du type Isopar ou Solvesso (marque déposée par la Société EXXON), notamment Isopar L ou Solvesso 100 qui contient essentiellement un mélange de méthyléthyl- et triméthyl-benzène, le Solvesso 150 qui renferme un mélange d'alkylbenzènes en particulier de diméthylbenzène et de tétraméthylbenzène. La phase organique peut aussi être constituée d'une coupe pétrolière.

On peut mettre en oeuvre également pour la phase organique des hydrocarbures chlorés polaires tels que le chloro- ou le dichloro-benzène, le chlorotoluène. Les éthers ainsi que les cétones aliphatiques et cycloaliphatiques comme par exemple l'éther de diisopropyle, l'éther de dibutyle, la méthylisobutylcétone, la diisobutylcétone, l'oxyde de mésityle, peuvent être envisagés.

On peut également envisager des solvants polaires à base d'alcool comme le 2-éthylhexanol.

La phase organique peut aussi être avantageusement à base d'un hydrocarbure apolaire notamment comme les hydrocarbures aliphatiques.

On peut citer dans cette catégorie préférée les coupes pétrolières du type Isopar, contenant essentiellement des hydrocarbures isoparaffiniques et parraffiniques en C-11 et C-12.

La dispersion selon l'invention comporte au moins un agent amphiphile.

Cet agent amphiphile a pour effet de stabiliser la dispersion de particules. Il sert également d'agent de transfert de phase lors de la préparation des dispersions (entre la phase aqueuse et la phase organique).

De préférence, l'agent amphiphile est un acide carboxylique qui comporte généralement de 10 à 50 atomes de carbone, de préférence de 10 à 25 atomes de carbone.

Cet acide peut être linéaire ou ramifié. Il peut être choisi parmi les acides aryliques, aliphatiques ou arylaliphatiques, portant éventuellement d'autres fonctions à condition que ces fonctions soient stables dans les milieux où l'on désire utiliser les dispersions selon la présente invention.

Ainsi, on peut mettre en oeuvre par exemple des acides carboxyliques aliphatiques, qu'ils soient naturels ou synthétiques. Il est bien entendu possible d'utiliser des acides en mélange.

A titre d'exemple, on peut citer les acides gras de tallol, d'huile de soja, de suif, d'huile de lin, l'acide oléique, l'acide linoléique, l'acide stéarique et ses isomères, l'acide pélargonique, l'acide caprique, l'acide laurique, l'acide myristique, l'acide dodécylbenzènesulfonique, l'acide éthyl-2-hexanoïque, l'acide naphténique, l'acide hexoïque.

A titre d'agent amphiphile préféré, on peut citer l'acide stéarique et ses isomères comme par exemple un mélange d'acides ou des produits qui contiennent des distributions en longueur de chaîne comme la Prisorine 3501 de Croda.

Cet agent amphiphile peut également être composé d'un ou plusieurs polyacides comme les acides succiniques substitués par des groupements polybutényl. Ces polyacides peuvent être utilisés seuls ou en combinaison avec un ou plusieurs acides monocarboxyliques aliphatiques contenant entre 10 et 20 atomes de carbone en moyenne.

A titre d'exemple, on peut citer le mélange acide oléique avec un ou plusieurs acides succiniques substitués par des groupements polybutényl, dans lesquels les groupements polybutényl ont un poids moléculaire moyen (mesuré par chromatographie en phase gazeuse) compris de 500 et 1300 et plus particulièrement entre 700 et 1000 $g.mol^{-1}$.

Selon une caractéristique de l'invention, les particules de la dispersion de l'invention sont à base d'un composé du fer sous forme cristallisée.

Cette forme cristallisée, qui peut être obtenue par la mise en oeuvre des étapes du procédé précité, peut notamment être observée par la technique de diffraction des rayons X (DRX) qui met en évidence des pics caractéristiques d'au moins une structure cristallisée définie du fer.

Les objets solides de la dispersion de l'invention sont sous forme de particules, ou d'agrégats de particules, d'un composé du fer dont la composition correspond essentiellement à un oxyde de fer sous forme cristallisée.

Les formes cristallisées de l'oxyde de fer constituant les particules selon l'invention sont typiquement les oxydes de Fe(III) de type maghémite ($\gamma$-$Fe_2O_3$) et/ou des oxydes de Fe(II) et Fe(III) de type magnétite ($Fe_3O_4$).

Le procédé précité permet généralement d'obtenir des particules à base d'oxyde de Fe(III) de type maghémite et/ou d'oxyde de Fe(II) et Fe(III) de type magnétite, la magnétite pouvant ensuite s'oxyder en oxyde de Fe(III) de type maghémite par exemple au contact de l'oxygène.

De préférence, les particules de taille supérieure ou égale à 4 nm dans la dispersion sont, pour au moins 90% d'entre elles, sous la forme d'un composé du fer sous forme cristallisée, avantageusement au moins 95%, préférentiellement au moins 99%.

Selon une autre caractéristique de l'invention, la taille moyenne $\overline{D}_{DRX}$ mesurée par DRX des particules de la

dispersion est inférieure ou égale à 12 nm.

De préférence, la taille moyenne $\overline{D}_{DRX}$ mesurée par DRX des particules de la dispersion est inférieure ou égale à 8 nm, de préférence inférieure ou égale à 7 nm, préférentiellement inférieure ou égale à 6 nm et avantageusement inférieure ou égale à 5 nm.

Généralement cette taille est d'au moins 4 nm.

Le caractère cristallisé des particules selon l'invention peut être notamment mis en évidence par analyse de DRX. Le diagramme de DRX permet de définir deux caractéristiques de ces particules :

- la nature de la phase cristalline : la position des pics de diffraction mesurés ainsi que leur intensité relative sont caractéristiques de la phase magnétite ou maghémite, la phase cristalline correspondant alors à la fiche ICDD 01-088-0315 ; et
- la taille moyenne $\overline{D}_{DRX}$ de cristallites (ou domaines cristallisés) : cette taille est calculée à partir de la largeur à mi hauteur du pic de diffraction du plan cristallographique (440) de la maghémite/magnétite :

$$\overline{D}_{DRX} = \frac{k \cdot \lambda}{\sqrt{H^2 - s^2} \cdot \cos\theta}$$

avec :

$\lambda$ : longueur d'onde = 1,54 Ǻ,
k : facteur de forme égal à 0,89,
H : largeur totale à mi-hauteur de la raie considérée, exprimée en degrés,
s : largeur instrumentale à l'angle $\theta$ déterminée par analyse de $LaB_6$ = 0,072°,
$\theta$ angle de diffraction (en radian) du pic de□ diffraction (440) de la magnétite et/ou maghémite = 0,547 rad.

L'analyse DRX peut être par exemple réalisée sur un appareil commercial de type X'Pert PRO MPD PANalytical composé notamment d'un goniomètre $\theta$-□$\theta$, permettant la caractérisation d'échantillons liquides. L'échantillon reste horizontal pendant l'acquisition et ce sont la source et le détecteur qui se déplacent.

Cette installation est pilotée par le logiciel X'Pert Datacollector fourni par le constructeur et l'exploitation des diagrammes de diffraction obtenus peut être réalisée à l'aide du logiciel X'Pert HighScore Plus version 2.0 ou supérieure (fournisseur PANalytical).

Selon une autre caractéristique de l'invention, il est préférable que l'essentiel des particules, à savoir au moins 80% en nombre, présentent une taille $D_{MET}$ inférieure ou égale à 12 nm, plus particulièrement inférieure ou égale 8 nm, de préférence inférieure ou égale à 7 nm, préférentiellement inférieure ou égale à 6 nm.

Typiquement, au moins 90% et plus particulièrement au moins 95% des particules présentent une taille $D_{MET}$ inférieure ou égale aux valeurs précitées.

Cette taille $D_{MET}$ peut être mise en évidence par analyse de la dispersion par microscopie électronique à transmission (MET), utilisée dans un mode imagerie permettant de visualiser à fort grossissement les particules et d'en mesurer leur taille.

De façon préférée et pour une meilleure précision de la mesure de la taille des particules, on peut procéder selon le protocole suivant.

La dispersion selon l'invention est préalablement diluée par son solvant de façon à atteindre une teneur massique en fer d'environ 0,035%. La dispersion ainsi diluée est alors disposée sur une grille d'observation (comme une membrane polymère carbonée supportée sur une grille de cuivre), et le solvant est évaporé.

On peut utiliser par exemple un microscope électronique à transmission donnant accès à des grandissements allant jusque 800 000, la tension d'accélération étant choisie de préférence égale à 120 kV.

Le principe de la méthode consiste à examiner sous microscope différentes régions (environ 10) et à mesurer les dimensions de 250 particules, en considérant ces particules comme des particules sphériques. Une particule est jugée comme identifiable lorsqu'au moins la moitié de son périmètre peut être défini. La taille $D_{MET}$ correspond alors au diamètre du cercle reproduisant correctement la circonférence de la particule. L'identification des particules exploitables peut se faire à l'aide d'un logiciel tel que : ImageJ, Adobe Photoshop ou Analysis.

On en déduit une répartition granulométrique cumulée des particules que l'on regroupe en 40 classes granulométriques allant de 0 à 20 nm, la largeur de chaque classe étant de 0,5 nm. Le nombre de particules dans chaque classe ou pour chaque $D_{MET}$ est la donnée de base pour représenter la répartition granulométrique différentielle en nombre.

En outre, les particules de la dispersion de l'invention présentent de préférence une granulométrie fine telle

qu'observée par MET.

Elles possèdent un diamètre médian $\Phi_{50}$ compris de préférence entre 3 nm et 12 nm, plus particulièrement entre 4 nm et 10 nm.

Le diamètre médian en nombre $\Phi_{50}$ est le diamètre tel que 50% des particules comptées sur les clichés de MET ont un diamètre plus petit que cette valeur, et 50% des particules comptées ont un diamètre plus grand que cette valeur.

Les particules selon l'invention présentent de préférence un indice de polydispersité $P_n$ compris de 0,1 à 0,5.

Cet indice de polydispersité $P_n$ est calculé à partir de la répartition granulométrique en nombre déterminée par MET selon la formule suivante :

$$P_n = \frac{\Phi_{84} - \Phi_{16}}{2 \cdot \Phi_{50}}$$

$\Phi_{16}$ étant le diamètre pour lequel 16% des particules ont un diamètre inférieur à cette valeur, et le $\Phi_{84}$ étant le diamètre pour lequel 84% des particules ont un diamètre inférieur à cette valeur.

Les particules selon l'invention satisfaisant à ce critère présentent une bonne monodispersité.

L'état de dispersion des objets solides peut être caractérisé par la diffusion dynamique de la lumière (DDL), encore appelée diffusion quasi-élastique de lumière (DQEL), ou encore de spectroscopie de corrélation de photons. Cette technique permet de mesurer un diamètre hydrodynamique $D_h$ des objets solides dont la valeur est très fortement affectée par la présence d'agrégats de particules.

Selon une caractéristique préférentielle de l'invention, les objets solides de l'invention présentent un diamètre hydrodynamique $D_h$ inférieur ou égal à 50 nm, de préférence inférieur ou égale à 30 nm, préférentiellement inférieur ou égal à 20 nm, avantageusement inférieur ou égal à 16 nm, mesuré par diffusion dynamique de la lumière (DDL).

Le diamètre hydrodynamique $D_h$ des objets solides d'une dispersion selon l'invention peut être mesuré sur la dispersion de l'invention, après dilution de celle-ci par son solvant de façon à atteindre une concentration en fer comprise de 1 à 4 $g.L^{-1}$.

On peut utiliser un appareil de diffusion de lumière de type ALV CGS 3 (Malvern) muni d'un corrélateur ALV série 5000 et du logiciel ALV Correlator V3.0 ou supérieure. Cet appareil utilise la méthode de traitement des données dite des « cumulants de Koppel », ce qui permet d'accéder à la valeur du diamètre hydrodynamique $D_h$.

Il est important de faire la mesure à la température (typiquement à 25°C) correspondant aux valeurs de viscosité et d'indice de réfraction utilisées pour le solvant dans le calcul du diamètre hydrodynamique et d'utiliser un angle de mesure fixé, typiquement à 90°.

Il est également recommandé d'effectuer les préparations de la dilution ainsi que les manipulations sous une hotte à flux laminaire pour éviter la contamination des échantillons par des poussières et fausser la mesure.

On considère que les données expérimentales sont validées si l'intensité diffusée est stable et si la fonction d'autocorrélation est dépourvue d'anomalies.

Enfin, l'intensité diffusée doit être comprise dans des limites définies pour chaque appareil.

Cette caractéristique préférée des objets de la dispersion augmente sa stabilité. Le caractère individualisé des particules augmente également la surface globale de contact disponible entre celles-ci et les suies et contribue ainsi à l'amélioration de l'activité catalytique de la dispersion selon l'invention.

Les dispersions selon l'invention peuvent en outre comprendre dans la phase organique des particules d'un composé du fer sous forme amorphe, notamment des particules dont la taille est supérieure ou égale à 4 nm.

Le caractère amorphe d'un composé du fer peut être mis en évidence par analyse de DRX de ce composé, lorsque l'on n'observe aucun pic caractéristique d'aucune phase cristalline du fer.

De préférence, les particules d'un composé du fer sous forme amorphe représentent au plus 75% en nombre de la quantité totale de particules de fer de la dispersion.

Pour des particules de taille supérieure ou égale à 4 nm, les particules d'un composé du fer sous forme amorphe représentent au plus 50% en nombre de la quantité totale de particule de fer de taille supérieure ou égale à 4 nm, et de façon préférée au plus 40% en nombre.

Selon un mode particulier de l'invention, les objets solides dispersés dans la dispersion (DSP1) de la composition selon l'invention sont sous forme de particules individualisées ou d'agrégats de particules, constitués d'un composé du fer sous forme cristallisée, tels que :

- lesdites particules présentent une taille moyenne $\overline{D}_{DRX}$ inférieure ou égale à 7 nm mesurée par diffraction des rayons X (DRX) ; et
- au moins 80% en nombre desdites particules présentent une taille $D_{MET}$ inférieure ou égale à 7 nm mesurée par

microscopie électronique en transmission (MET).

Les objets solides de cette dispersion (DSP1) peuvent de préférence présenter un diamètre hydrodynamique $D_h$ inférieur ou égal à 30 nm mesuré par diffusion dynamique de la lumière (DDL).

Selon un autre mode particulier de l'invention, la phase organique de la dispersion (DSP2) de la composition selon l'invention est une phase organique apolaire et les objets solides dispersés dans la dispersion de la composition selon l'invention sont sous forme de particules individualisées ou d'agrégats de particules, constitués d'un composé du fer sous forme cristallisée, tels que :

- lesdits objets solides présentent un diamètre hydrodynamique $D_h$ inférieur ou égal à 30 nm mesuré par diffusion dynamique de la lumière (DDL) ;
- lesdites particules présentent une taille moyenne $\overline{D}_{DRX}$ inférieure ou égale à 7 nm mesurée par diffraction des rayons X (DRX) ; et
- au moins 80% en nombre desdites particules présentent une taille $D_{MET}$ inférieure ou égale à 7 nm mesurée par microscopie électronique en transmission (MET).

Les valeurs préférentielles ou plus particulières des paramètres $\overline{D}_{DRX}$, $D_h$, $D_{MET}$ ainsi que du diamètre $\Phi_{50}$ et de l'indice $P_n$ données plus haut s'appliquent de même ici pour les dispersions DSP 1 et DSP 2 dans la mesure où ces valeurs vérifient aussi les limites données plus haut dans l'énoncé des caractéristiques de DSP 1 et DSP 2.

Les dispersions selon l'invention présentent une concentration massique en composé du fer qui peut être d'au moins 2%, plus particulièrement d'au moins 5%, cette concentration étant exprimée en masse de fer métal par rapport à la masse totale de la dispersion.

Cette concentration peut généralement aller jusqu'à 20%.

La teneur en fer peut être déterminée par toute technique connue de l'homme de l'art comme par la mesure par spectroscopie de fluorescence X appliquée directement sur la dispersion selon l'invention.

La présente invention concerne également un procédé de préparation des dispersions selon l'invention.

Dans l'étape a) du procédé, on met en contact une base et un mélange comprenant un sel de Fe(II) et un sel de Fe(III), selon un rapport molaire Fe(II)/Fe(III) compris de 0,45 à 0,55, de préférence environ égal à 0,5, avantageusement égal à 0,5, dans une phase aqueuse, typiquement une solution aqueuse de la base et des sels de fer.

Comme base, on peut utiliser notamment des composés de type hydroxyde. On peut citer les hydroxydes d'alcalins ou d'alcalino-terreux et l'ammoniaque. On peut aussi utiliser les amines secondaires, tertiaires ou quaternaires.

Comme sel de fer on peut utiliser tout sel soluble dans l'eau. A titre de sel de Fe(II), on peut mentionner le chlorure ferreux $FeCl_2$. A titre de sel de Fe(III), on peut mentionner le nitrate ferrique $Fe(NO_3)_3$.

Lors de l'étape a), la réaction ayant lieu entre le sel de Fe(II), le sel de Fe(III) et la base se fait généralement dans des conditions telles que le pH du mélange réactionnel formé reste supérieur ou égale à 8 lors de la mise en contact des sels de fer et de la base dans le milieu réactionnel.

De préférence, lors de l'étape a), le pH du mélange réactionnel est maintenu à une valeur supérieure ou égale à 8. Cette valeur de pH est typiquement comprise entre 9 et 13.

La mise en contact des sels de fer et de la base en phase aqueuse peut se faire par introduction d'une solution des sels de fer dans une solution contenant la base, dont le pH est d'au moins 8. On peut aussi introduire les sels de fer et la base dans une solution contenant des sels, à une concentration typiquement inférieure ou égale à 3 $mol.L^{-1}$, comme par exemple du nitrate de sodium, et dont le pH est préalablement ajusté à une valeur supérieure ou égale à 8. Il est possible de réaliser la mise en contact en continu, la condition de pH étant réalisée en réglant les débits respectifs de la solution des sels de fer et de la solution contenant la base.

Il est possible, selon un mode de réalisation préféré de l'invention, de travailler dans des conditions telles que lors de la réaction entre les sels de fer et la base on maintienne constant le pH de la phase aqueuse. Par maintien constant du pH on entend une variation du pH de $\pm$ 0,2 unité de pH par rapport à la valeur fixée. De telles conditions peuvent être obtenues en ajoutant lors de la réaction entre les sels de fer et la base, par exemple lors de l'introduction de la solution des sels de fer dans la solution de la base, une quantité supplémentaire de base dans la phase aqueuse.

Dans le cadre de la présente invention, les inventeurs ont observé que la taille des particules peut être modulée en fonction du pH auquel est maintenue la phase aqueuse. Typiquement, et sans vouloir être lié à une théorie particulière, la taille des particules est d'autant plus faible que le pH de la phase aqueuse est élevé.

La réaction de l'étape a) est généralement effectuée à température ambiante. Cette réaction peut avantageusement être réalisée sous atmosphère d'air ou d'azote ou d'un mélange azote-air.

A l'issue de la réaction de l'étape a), on obtient un précipité. Il est éventuellement possible de faire subir un mûrissement au précipité en le maintenant pendant un certain temps, par exemple quelques heures, dans la phase aqueuse.

Selon une première variante avantageuse du procédé selon l'invention, le précipité n'est pas séparé de la phase aqueuse à l'issue de l'étape a) et est laissé en suspension dans la phase aqueuse de la réaction de l'étape a).

Selon une autre variante du procédé selon l'invention, le procédé comporte, après l'étape a) et avant l'étape b), une étape a) de séparation du précipité formé à l'issue de l'étape a) de la phase aqueuse.

Cette étape a) de séparation est effectuée par tout moyen connu.

Le précipité séparé peut ensuite être lavé par de l'eau par exemple. De préférence, le précipité n'est soumis à aucune étape de séchage ou de lyophilisation ou toute opération de ce type.

Le précipité peut éventuellement être remis en suspension dans une seconde phase aqueuse.

Pour obtenir une dispersion en phase organique, lors de l'étape b), on met en contact le précipité obtenu à l'issue de l'étape a), qu'il soit séparé de la phase aqueuse ou non, avec la phase organique dans laquelle on souhaite obtenir la dispersion.

Cette phase organique est du type de celle qui a été décrite plus haut.

La mise en contact de l'étape b) se fait en présence de l'agent amphiphile précité, éventuellement après neutralisation de la suspension obtenue à l'issue de l'étape a).

De préférence, le rapport molaire entre le nombre de moles d'agent amphiphile et le nombre de moles de fer est compris de 0,2 à 1, préférentiellement comprise de 0,2 à 0,8.

La quantité de phase organique à incorporer est ajustée de manière à obtenir une concentration en oxyde telle que mentionnée plus haut.

L'ordre de l'introduction lors de l'étape b) des différents éléments de la dispersion est indifférent.

On peut mettre en contact simultanément le précipité obtenu, l'agent amphiphile et la phase organique.

On peut également faire le prémélange de l'agent amphiphile et de la phase organique.

La mise en contact entre le précipité et la phase organique peut se faire dans un réacteur qui est sous une atmosphère d'air, d'azote, ou un mélange d'air-azote.

Bien que la mise en contact entre le précipité et la phase organique puisse se faire à température ambiante, environ 20°C, il est préférable d'opérer à une température choisie dans un intervalle allant de 30°C à 150°C, avantageusement entre 40°C et 100°C.

Dans certains cas, en raison de la volatilité de la phase organique, il y a lieu de condenser ses vapeurs par refroidissement à une température inférieure à son point d'ébullition.

Le mélange réactionnel résultant du précipité, de la phase organique et de l'agent amphiphile est maintenu sous agitation pendant toute la durée du chauffage.

Dans le cas de la première variante où le précipité n'a pas été séparé de la phase aqueuse à l'issue de l'étape a), lorsque l'on arrête le chauffage, on note la présence de deux nouvelles phases : une phase organique contenant la dispersion de particules, et une phase aqueuse résiduelle. On sépare ensuite la phase organique contenant la dispersion de particules et la phase aqueuse résiduelle selon les techniques classiques de séparation, comme par exemple la décantation ou la centrifugation.

Quelle que soit la variante du procédé, conformément à la présente invention, on obtient à l'issue de l'étape b) des dispersions organiques présentant les caractéristiques précitées.

Les dispersions comprenant en outre des particules d'un composé du fer sous forme amorphe peuvent être obtenues par mélange d'une première dispersion de particules d'un composé du fer sous forme amorphe dans une phase organique avec une seconde dispersion de particules d'un composé du fer sous forme cristallisée, cette seconde dispersion étant du type selon le premier mode de réalisation de l'invention.

On peut utiliser comme première dispersion de particules d'un composé du fer sous forme amorphe celles décrites dans WO 2003/053560 par exemple.

On mélange de préférence des dispersions dont les phases organiques sont identiques.

Détergent à base de sel d'ammonium quaternaire

La composition de la présente invention comprend une composition détergente comprenant un sel d'ammonium quaternaire.

Le sel d'ammonium quaternaire peut être le produit de réaction :

(i) d'au moins un composé qui peut comprendre :

(a) le produit de condensation d'un agent d'acylation à substitution hydrocarboné et d'un composé comportant un atome d'oxygène ou d'azote capable de condenser l'agent d'acylation, le produit de condensation possédant au moins une fonction amine tertiaire ;

(b) une amine à substitution polyalcène comportant au moins une fonction amine tertiaire ; et

(c) un produit de réaction de Mannich comportant au moins une fonction amine tertiaire, le produit de réaction

de Mannich étant dérivé d'un phénol à substitution hydrocarbonée, d'un aldéhyde et d'une aminé ; et

(ii) d'un agent de quaternisation approprié pour convertir la fonction amine tertiaire du composé (i) en azote quaternaire.

L'agent de quaternisation peut comprendre des sulfates de dialkyle, des halogénures de benzyle, des carbonates à substitution hydrocarbonée; des époxydes à substitution hydrocarbonée en combinaison avec un acide ou des mélanges de ceux-ci.

Les composés des constituant (i)(a), (i)(b) et (i)(c), décrits en plus amples détails ci-dessous, contiennent au moins une fonction amine tertiaire et couvrent les composés qui peuvent être alkylés pour contenir au moins une fonction amine tertiaire après une étape d'alkylation.

Des exemples du sel d'ammonium quaternaire et des procédés permettant de les préparer sont décrits dans les brevets US 4 253 980, 3 778 371, 4 171 959, 4 326 973, 4 338 206 et 5 254 138.

Les sels d'ammonium quaternaire peuvent être préparés en présence d'un solvant, qui peut ou non être éliminé une fois la réaction complète. Comme solvants convenables, on peut citer, mais sans limitation, une huile diluante, un naphta de pétrole et certains alcools.

Dans un mode de réalisation, ces alcools contiennent au moins 2 atomes de carbone, et dans d'autres modes de réalisation au moins 4, au moins 6 ou au moins 8 atomes de carbone.

Dans un autre mode de réalisation, le solvant de la présente invention contient 2 à 20 atomes de carbone, 4 à 16 atomes de carbone, 6 à 12 atomes de carbone, 8 à 10 atomes de carbone, ou seulement 8 atomes de carbone. Ces alcools portent normalement un substituant 2-alkyle en C1-4, à savoir méthyle, éthyle, ou n'importe quel isomère de propyle ou de butyle. Comme exemples d'alcools appropriés, on peut citer le 2-méthylheptanol, le 2-méthyldécanol, le 2-éthylpentanol, le 2-éthylhexanol, le 2-éthylnonanol, le 2-propylheptanol, le 2-butylheptanol, le 2-butyloctanol, l'isooctanol, le dodécanol, le cyclohexanol, le méthanol, l'éthanol, le propan-1-ol, le 2-méthylpropan-2-ol, le 2-méthylpropan-1-ol, le butan-1-ol, le butan-2-ol, le pentanol et ses isomères, et des mélanges de ceux-ci.

Dans un mode de réalisation, le solvant de la présente invention est le 2-éthylhexanol, le 2-éthylnonanol, le 2-méthylheptanol, ou des combinaisons de ceux-ci.

Dans un mode de réalisation, le solvant de la présente invention comprend du 2-éthylhexanol.

Sels d'ammonium quaternaire de succinimide

Dans un mode de réalisation, le détergent sel d'ammonium quaternaire comprend le produit de réaction :

(i) (a) du produit de condensation d'un agent d'acylation à substitution hydrocarboné et d'un composé comportant un atome d'oxygène ou d'azote capable de se condenser avec ledit agent d'acylation, le produit de condensation possédant au moins une fonction amine tertiaire ; et

(ii) d'un agent de quaternisation approprié pour convertir la fonction amine tertiaire du composé (i) en azote quaternaire.

Parmi les agents d'acylation à substitution hydrocarboné utiles dans la présente invention, on peut citer le produit de réaction d'un hydrocarbure à chaîne longue, généralement d'une polyoléfine, avec un acide carboxylique mono-insaturé ou un de ses dérivés.

Comme acides carboxyliques mono-insaturés ou leurs dérivés convenables, on peut citer :

(i) les acides dicarboxyliques $\alpha,\beta$-mono-insaturés en $C_4$ à $C_{10}$, tels que l'acide fumarique, l'acide itaconique, l'acide maléique ;

(ii) les dérivés de (i), tels que les anhydrides ou les mono- ou di-esters de (i) dérivés d'un alcool en $C_1$ à $C_5$ ;

(iii) les acides monocarboxyliques $\alpha,\beta$-mono-insaturés en $C_3$ à $C_{10}$, tels que l'acide acrylique et l'acide méthacrylique ; ou

(iv) les dérivés de (iii), tels que les esters de (iii) dérivés d'un alcool en $C_1$ à $C_5$.

Comme hydrocarbures à chaîne longue convenables à utiliser dans la préparation des agents d'acylation à substitution hydrocarboné, on peut citer tout composé contenant une liaison oléfinique, représenté par la formule générale (I) suivante :

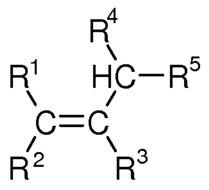

(I)

dans laquelle chacun des $R^1$, $R^2$, $R^3$, $R^4$ et $R^5$ représente, indépendamment, un atome d'hydrogène ou un groupe hydrocarboné.

Dans certains modes de réalisation, au moins un des radicaux $R^3$, $R^4$ ou $R^5$ représente un groupe hydrocarboné contenant au moins 20 atomes de carbone.

Ces hydrocarbures à chaîne longue, qui peuvent aussi être décrits comme étant des polyoléfines ou des polymères d'oléfines, sont mis à réagir avec les acides carboxyliques mono-insaturés et les dérivés décrits ci-dessus pour former les agents d'acylation à substitution hydrocarboné utilisés pour préparer le détergent azoté de la présente invention.

Comme polymères d'oléfines convenables, on peut citer les polymères comprenant une majorité en moles de mono-oléfines en $C_2$ à $C_{20}$, ou en $C_2$ à $C_5$. Parmi ces oléfines, on peut citer l'éthylène, le propylène, le butylène, l'isobutylène, le pentène, l'octène-1 ou le styrène. Les polymères peuvent être des homopolymères, tels que du polyisobutylène, ainsi que des copolymères de deux ou plus de deux de ces oléfines. Comme copolymères convenables, on peut citer les copolymères d'éthylène et de propylène, de butylène et d'isobutylène, et de propylène et d'isobutylène. Comme autres copolymères convenables, on peut citer ceux dans lesquels une minorité en moles des monomères du copolymère, par exemple 1 à 10% en moles, sont une dioléfine en $C_4$ à $C_{18}$. Parmi ces copolymères, on peut citer : un copolymère d'isobutylène et de butadiène ; et un copolymère d'éthylène, de propylène et de 1,4-hexadiène.

Dans un mode de réalisation, au moins un des groupes -R de la formule (I) indiquée ci-dessus est dérivé de polybutène, c'est-à-dire de polymères d'oléfines en $C_4$, notamment de 1-butène, de 2-butène et d'isobutylène. Comme polymères en $C_4$, on peut citer le polyisobutylène.

Dans un autre mode de réalisation, au moins un des groupes -R de la formule (I) est dérivé de polymères d'éthylène et d'alpha-oléfine, notamment de polymères éthylène-propylène-diène. Comme exemples de documents qui ont décrit des copolymères d'éthylène et d'alpha-oléfine et des terpolymères éthylène-oléfine inférieure-diène, on peut citer les brevets US 3 598 738, 4 026 809, 4 032 700, 4 137 185, 4 156 061, 4 320 019, 4 357 250, 4 658 078, 4 668 834, 4 937 299 et 5 324 800.

Dans un autre mode de réalisation, les liaisons oléfiniques de la formule (I) sont principalement des groupes vinylidène, représentés par la formule (II) suivante :

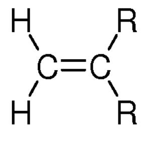

(II)

dans laquelle chaque R est un groupe hydrocarboné, qui dans certains modes de réalisation peut être :

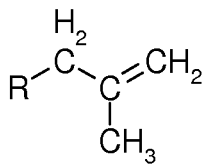

(III)

où R représente un groupe hydrocarboné.

Dans un mode de réalisation, la teneur en vinylidène de la formule (I) peut représenter au moins 30% en moles de groupes vinylidène, au moins 50% en moles de groupes vinylidène, ou au moins 70% en moles de groupes vinylidène. De tels produits et procédés de préparation sont décrits dans les brevets US 5 071 919, 5 137 978, 5 137 980, 5 286 823, 5 408 018, 6 562 913, 6 683 138, 7 037 999, et dans les documents US 2004/0176552A1, 2005/0137363 et 2006/0079652A1. De tels produits sont disponibles dans le commerce auprès de BASF, sous la marque GLISSOPAL™ et auprès de Texas PetroChemical LP, sous la marque TPC 1105™ et TPC 595™.

Les procédés de fabrication d'agents d'acylation à substitution hydrocarbonée par réaction de réactifs de type

acide carboxylique mono-insaturé et de composés de formule (I) sont bien connus dans la technique et sont divulgués dans les brevets US 3 361 673, 3 401 118, 3 087 436, 3 172 892, 3 272 746, 3 215 707, 3 231 587, 3 912 764, 4 110 349, 4 234 435, 6 077 909 et 6 165 235.

Dans un autre mode de réalisation, l'agent d'acylation à substitution hydrocarbonée peut être fabriqué par réaction d'un composé représenté par la formule (I) avec au moins un réactif carboxylique représenté par les formules (IV) et (V) suivantes :

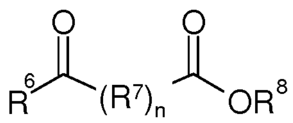

(IV)

et

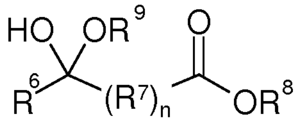

(V)

dans lesquelles chacun des $R^6$, $R^8$ et $R^9$ représente indépendamment H ou un groupe hydrocarboné, $R^7$ représente un groupe divalent hydrocarboné, et n est égal à 0 ou à 1. De tels composés et les procédés permettant de les fabriquer sont divulgués dans les brevets US 5 739 356, 5 777 142, 5 786 490, 5 856 524, 6 020 500 et 6 114 547.

Dans un autre mode de réalisation encore, l'agent d'acylation à substitution hydrocarbonée peut être fabriqué par réaction de tout composé représenté par la formule (I) avec tout composé représenté par la formule (IV) ou la formule (V), la réaction étant effectuée en présence d'au moins un aldéhyde ou d'au moins une cétone. Comme aldéhydes convenables, on peut citer le formaldéhyde, l'acétaldéhyde, le propionaldéhyde, le butyraldéhyde, l'isobutyraldéhyde, le pentanal, l'hexanal, l'heptaldéhyde, l'octanal, le benzaldéhyde, ainsi que des aldéhydes supérieurs. D'autres aldéhydes, tels que les dialdéhydes, tout spécialement le glyoxal, sont utiles, même si on préfère généralement les monoaldéhydes. Dans un mode de réalisation, l'aldéhyde est le formaldéhyde, qui peut être fournie en solution aqueuse, que l'on appelle souvent formaline, mais qui est plus souvent utilisée sous la forme polymère que l'on appelle paraformaldéhyde. Le paraformaldéhyde est considéré comme étant un équivalent réactif et/ou une source de formaldéhyde. Comme autres équivalents réactifs, on peut citer les hydrates ou les trimères cycliques. Comme cétones convenables, on peut citer l'acétone, la butanone, la méthyléthylcétone, ainsi que d'autres cétones. Dans certains modes de réalisation, un des deux groupes hydrocarbonés de la cétone est un groupe méthyle. Des mélanges de deux ou plus de deux aldéhydes et/ou cétones sont aussi utiles. De tels agents d'acylation à substitution hydrocarbonée et des procédés permettant de les fabriquer sont divulgués dans les brevets US 5 840 920, 6 147 036 et 6 207 839.

Dans un autre mode de réalisation, l'agent d'acylation à substitution hydrocarbonée peut comprendre des composés d'acide méthylène-bisphénol-alcanoïque. De tels composés peuvent être le produit de condensation

(i) d'un composé aromatique de formule (VI) :

$$R_m\text{-Ar-}Z_c \qquad (VI)$$

et

(ii) d'au moins un réactif carboxylique tel que les composés de formules (IV) et (V) décrits ci-dessus,

où, dans la formule (VI) :

- chaque R représente indépendamment un groupe hydrocarboné ;
- m est égal à 0 ou représente un nombre entier de 1 jusqu'à 6, sous réserve que m ne dépasse pas le nombre de valences du groupe Ar correspondant disponible pour la substitution ;
- Ar représente un groupe ou groupement aromatique contenant de 5 à 30 atomes de carbone et de 0 à 3 substituants optionnels tels que des groupes amino, hydroxy- ou alkyl-polyoxyalkyle, nitro, aminoalkyle et carboxy, ou des combinaisons de deux ou plus de deux desdits substituants optionnels ;
- Z représente indépendamment -OH, -O, un groupe alcoxy inférieur ou
- $(OR^{10})_bOR^{11}$ dans lequel chaque $R^{10}$ représente indépendamment un groupe hydrocarbyle divalent, b est un nombre de 1 à 30, et $R^{11}$ représente -H ou un groupe hydrocarbyle ; et

- c est un nombre qui s'échelonne de 1 à 3.

Dans un mode de réalisation, au moins un groupe hydrocarboné sur le groupement aromatique est dérivé de polybutène.

Dans un mode de réalisation, la source des groupes hydrocarbonés décrits ci-dessus provient de polybutènes obtenus par polymérisation d'isobutylène en présence d'un catalyseur acide de Lewis tel que le trichlorure d'aluminium ou le trifluorure de bore. De tels composés et des procédés permettant de les fabriquer sont divulgués dans les brevets US 3 954 808, 5 336 278, 5 458 793, 5 620 949, 5 827 805 et 6 001 781.

Dans un autre mode de réalisation, la réaction de (i) avec (ii), éventuellement en présence d'un catalyseur acide tel que les acides sulfoniques organiques, les hétéropolyacides et les acides minéraux, peut être effectuée en présence d'au moins un aldéhyde ou d'au moins une cétone. Le réactif aldéhyde ou cétone employé dans ce mode de réalisation est le même que ceux décrits ci-dessus. De tels composés et des procédés permettant de les fabriquer sont divulgués dans le brevet US 5 620 949.

On trouvera encore d'autres procédés de fabrication d'agents d'acylation à substitution hydrocarbonée appropriés dans les brevets US 5 912 213, 5 851 966 et 5 885 944.

Les détergents de type sel d'ammonium quaternaire de succinimide sont obtenus par réaction de l'agent d'acylation à substitution hydrocarbonée décrit ci-dessus avec un composé comportant un atome d'oxygène ou d'azote capable de se condenser avec l'agent d'acylation. Dans un mode de réalisation, les composés appropriés contiennent au moins une fonction amine tertiaire.

Dans un mode de réalisation, ce composé peut être représenté par une des formules (VII) et (VIII) suivantes :

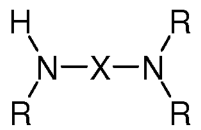

(VII)

et

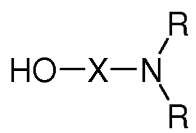

(VIII)

dans lesquelles, pour les deux formules (VII) et (VIII), chaque X représente indépendamment un groupe alkylène contenant 1 à 4 atomes de carbone, et chaque R représente indépendamment un groupe hydrocarboné.

Comme composés convenables, on peut citer, mais sans limitation : la 1-aminopipéridine, la 1-(2-aminoéthyl)pipéridine, la 1-(3-aminopropyl)-2-pipécoline, la 1-méthyl-(4-méthylamino)pipéridine, la 1-amino-2,6-diméthylpipéridine, la 4-(1-pyrrolidinyl)pipéridine, la 1-(2-aminoéthyl)pyrrolidine, la 2-(2-aminoéthyl)-1-méthylpyrrolidine, la N,N-diéthyléthylènediamine, la N,N-diméthyléthylènediamine, la N,N-dibutyléthylènediamine, la N,N,N'-triméthyléthylènediamine, la N,N-diméthyl-N'-éthyléthylènediamine, la N,N-diéthyl-N'-méthyléthylènediamine, la N,N,N'-triéthyléthylènediamine, la 3-diméthylaminopropylamine, la 3-diéthylaminopropylamine, la 3-dibutylaminopropylamine, la N,N,N'-triméthyl-1,3-propanediamine, la N,N,2,2-tétraméthyl-1,3-propanediamine, le 2-amino-5-diéthylaminopentane, la N,N,N',N'-tétraéthyldiéthylènetriamine, la 3,3'-diamino-N-méthyldipropylamine, la 3,3'-iminobis(N,N-diméthylpropylamine), la N-méthyl-1,3-diaminopropane, la dibutylènetriamine, la diéthylènetriamine, la dipropylènetriamine, la triéthylènetétraamine, la tétraéthylènepentamine, la pentaéthylènehexaamine, l'hexaméthylènetetraamine et la bis(hexaméthylène)triamine, ou des combinaisons de ceux-ci.

Dans certains modes de réalisation l'amine utilisée est la 3-diméthylaminopropylamine, la 3-diéthylaminopropylamine, la 1-(2-aminoéthyl)pyrrolidine, la N,N-diméthyléthylènediamine, ou des combinaisons de celles-ci.

Comme autres composés convenables, on peut également citer les composés hétérocycliques à substitution aminoalkyle tels que le 1-(3-aminopropyl)imidazole et la 4-(3-aminopropyl)morpholine, la 1-(2-aminoéthyl)pipéridine, la 3,3-diamino-N-méthyldipropylamine, la 3',3-aminobis(N,N-diméthylpropylamine). Celles-ci ont été citées dans la liste qui précède.

Comme autres composés contenant un atome d'azote ou d'oxygène qui sont également capables de se condenser avec l'agent d'acylation et qui possèdent aussi une fonction amine tertiaire, on peut citer : les alcanolamines, notamment mais sans limitation, la triéthanolamine, la triméthanolamine, le N,N-diméthylaminopropanol, le N,N-diéthylaminopropanol, le N,N-diéthylaminobutanol, la N,N,N-tris(hydroxyéthyl)amine et la N,N,N- tris(hydroxyméthyl)amine.

Les détergents de type sel d'ammonium quaternaire de succinimide de la présente invention sont formés par combinaison du produit de réaction décrit ci-dessus (le produit de réaction d'un agent d'acylation à substitution hydrocarbonée et d'un composé comportant un atome d'oxygène ou d'azote capable de se condenser avec ledit agent d'acylation et comportant en outre au moins une fonction amine tertiaire) avec un agent de quaternisation approprié pour convertir la fonction amine tertiaire en azote quaternaire. Des agents de quaternisation convenables sont détaillés ci-dessous.

Dans certains modes de réalisation, ces préparations peuvent être effectuées sans solvant ou en présence d'un solvant, comme décrit ci-dessus. A titre d'exemple non limitatif, des préparations de sels d'ammonium quaternaire de succinimide sont indiquées ci-dessous.

Exemple Q-1

L'anhydride polyisobutylène succinique (100 parties en poids), qui est quant à lui préparé par réaction de polyisobutylène à forte teneur en vinylidène de masse moléculaire moyenne en nombre égale à 1000 et d'anhydride maléique, est chauffé à 80°C et est chargé dans un réacteur à double enveloppe équipé d'un agitateur, d'un réfrigérant, d'une pompe d'alimentation fixée à un tube de sub-addition (addition sous la surface du mélange réactionnel), d'une conduite d'azote et d'un thermocouple/régulateur de température. Le réacteur est chauffé à 100°C. De la diméthylaminopropylamine (10,9 parties en poids) est chargée dans la réaction, en maintenant la température du lot au-dessous de 120°C, en l'espace de 8 heures. Le mélange réactionnel est ensuite chauffé à 150°C et maintenu à cette température pendant 4 heures, pour donner un détergent succinimide non quaternisé.

Une partie du détergent succinimide non quaternisé (100 parties en poids) est ensuite chargée dans un réacteur semblable. De l'acide acétique (5,8 parties en poids) et du 2-éthylhexanol (38,4 parties en poids) sont ajoutés à la cuve et le mélange est agité et chauffé à 75°C. De l'oxyde de propylène (8,5 parties en poids) est ajouté dans le réacteur en l'espace de 4 heures, la température réactionnelle étant maintenue à 75°C. Le lot est maintenu à cette température pendant 4 heures. Le produit résultant contient un détergent succinimide quaternisé.

Exemple Q-2

Un détergent succinimide non quaternisé est préparé à partir d'un mélange d'anhydride polyisobutylène succinique, comme décrit ci-dessus (100 parties en poids), et d'huile diluante - Pilot 900 (17,6 parties en poids) - que l'on chauffe sous agitation à 110°C sous une atmosphère d'azote. De la diméthylaminopropylamine (DMAPA, 10,8 parties en poids) est ajoutée lentement en l'espace de 45 minutes en maintenant la température du lot au-dessous de 115°C. La température réactionnelle est portée à 150°C et maintenue à cette valeur pendant 3 heures de plus. Le composé résultant est un détergent succinimide non quaternisé DMAPA.

Une partie de ce détergent succinimide non quaternisé (100 parties en poids) est chauffée sous agitation à 90°C. Du sulfate de diméthyle (6,8 parties en poids) est chargé dans le réacteur et l'agitation est reprise à 300 tours/min sous une couverture d'azote. La réaction exothermique qui se produit élève la température du lot à approximativement 100°C. La réaction est maintenue à 100°C pendant 3 heures avant refroidissement et décantation. Le produit résultant contient un sel d'ammonium quaternaire de sulfate de diméthyle.

Sels d'ammonium quaternaire à substitution polvalcène

Dans un mode de réalisation, le sel d'ammonium quaternaire est le produit de réaction :

(i) (b) d'une amine à substitution polyalcène comportant au moins une fonction amine tertiaire, et
(ii) d'un agent de quaternisation approprié pour convertir la fonction amine tertiaire du composé (i) en azote quaternaire.

Les amines à substitution polyalcène convenables peuvent être dérivées d'un polymère d'oléfine et d'une amine, telle que l'ammoniac, les monoamines, les polyamines ou des mélanges de ces amines. Elles peuvent être préparées par toutes sortes de procédés. Les amines à substitution polyalcène convenables ou les amines dont elles dérivent contiennent une fonction amine tertiaire ou bien peuvent être alkylées jusqu'à ce qu'elles contiennent une fonction amine tertiaire, du moment que l'amine à substitution polyalcène possède au moins une fonction amine tertiaire lorsqu'elle est mise à réagir avec l'agent de quaternisation.

Un procédé de préparation d'une amine à substitution polyalcène consiste à faire réagir un polymère d'oléfine halogéné avec une amine, comme le divulguent les brevets US 3 275 554, 3 438 757, 3 454 555, 3 565 804, 3 755 433 et 3 822 289.

Un autre procédé de préparation d'une amine à substitution polyalcène consiste à faire réagir une oléfine hydro-formylée avec une polyamine et à hydrogéner le produit de réaction, comme le divulguent les brevets US 5 567 845 et 5 496 383.

Un autre procédé de préparation d'une amine à substitution polyalcène consiste à convertir un polyalcène, au moyen d'un réactif d'époxydation classique, avec ou sans catalyseur, en époxyde correspondant et à convertir l'époxyde en amine à substitution polyalcène par réaction avec de l'ammoniac ou une amine dans des conditions d'amination réductrice, comme le divulgue le brevet US 5 350 429.

Un autre procédé de préparation d'une amine à substitution polyalcène consiste à hydrogéner un β-aminonitrile, préparé par réaction d'une amine avec un nitrile, comme le divulgue le brevet US 5 492 641.

Encore un autre procédé de préparation d'une amine à substitution polyalcène consiste à hydroformyler du polybutène ou du polyisobutylène, avec un catalyseur, tel que du rhodium ou du cobalt, en présence de CO, de $H_2$ et de $NH_3$, à des pressions et des températures élevées, comme le divulguent les brevets US 4 832 702, 5 496 383 et 5 567 845.

Les procédés ci-dessus de préparation d'amines à substitution polyalcène ne sont donnés qu'à titre d'illustration et n'entendent pas être une liste exhaustive. Le cadre des amines à substitution polyalcène de la présente invention n'est pas limité à leurs procédés de préparation divulgués ci-dessus.

L'amine à substitution polyalcène peut être dérivée de polymères d'oléfines. Les polymères d'oléfines convenables pour préparer les amines à substitution polyalcène de l'invention sont les mêmes que ceux décrits ci-dessus.

L'amine à substitution polyalcène peut être dérivée d'ammoniac, de monoamines, de polyamines, ou de mélanges de ceux-ci, notamment de mélanges de monoamines différentes, de mélanges de polyamines différentes, et de mélanges de monomamines et de polyamines (qui incluent les diamines). Comme amines convenables, on peut citer les amines aliphatiques, aromatiques, hétérocycliques et carbocycliques.

Dans un mode de réalisation, les amines peuvent être caractérisées par la formule :

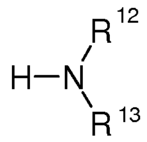 (IX)

dans laquelle $R^{12}$ et $R^{13}$ représentent chacun indépendamment un atome d'hydrogène, un groupe hydrocarboné, un groupe hydrocarboné à substitution amino, un groupe hydrocarboné à substitution hydroxy, un groupe hydrocarboné à substitution alcoxy ou des groupes acylimidoyle, à condition que pas plus d'un des radicaux $R^{12}$ et $R^{13}$ ne représente un atome d'hydrogène.

L'amine peut être caractérisée par la présence d'au moins d'au moins un groupe amino primaire ($H_2N$-) ou secondaire (H-N<). Ces amines, ou les amines à substitution polyalcène qu'elles servent à préparer, peuvent être alkylées si nécessaire pour s'assurer qu'elles contiennent au moins une fonction amine tertiaire. Comme exemples de monoamines appropriées, on peut citer l'éthylamine, la diméthylamine, la diéthylamine, la n-butylamine, la dibutylamine, l'allylamine, l'isobutylamine, la cocoamine, la stéarylamine, la laurylamine, la méthyllaurylamine, l'oléylamine, la N-méthyl-octylamine, la dodécylamine, la diéthanolamine, la morpholine et l'octadécylamine.

Parmi les polyamines dont dérive le détergent, on peut citer principalement les alkylèneamines répondant, pour la plupart, à la formule :

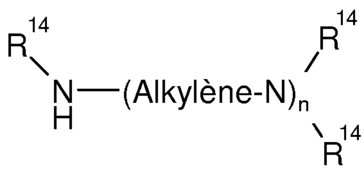 (X)

dans laquelle n est un nombre entier typiquement inférieur à 10, chaque $R^{14}$ représente indépendamment un atome d'hydrogène ou un groupe hydrocarboné comportant typiquement jusqu'à 30 atomes de carbone, et le groupe Alkylène est typiquement un groupe alkylène comportant moins de 8 atomes de carbone.

Parmi les alkylèneamines, on peut citer principalement les éthylèneamines, les hexylèneamines, les heptylèneamines, les octylèneamines, d'autres polyméthylèneamines. Des exemples spécifiques de celles-ci sont les suivants : éthylènediamine, diéthylènetriamine, triéthylènetétramine, propylènediamine, décaméthylènediamine, octaméthylènediamine, di(heptaméthylène)triamine, tripropylènetétramine, tétraéthylènepentamine, triméthylènediamine, pentaéthylènehexamine, di(triméthylène)triamine, aminopropylmorpholine et diméthylaminopropylamine. Des homologues supérieurs tels que ceux obtenus par condensation de deux ou plus de deux des alkylèneamines indiquées ci-dessus sont également utiles. La tétraéthylènepentamine est particulièrement utile.

Les éthylèneamines, que l'on appelle aussi polyéthylènepolyamines, sont tout spécialement utiles. Elles sont décrites en détail dans la rubrique "Ethylene Amines" dans Encyclopedia of Chemical Technology, Kirk et Othmer, Vol. 5, pp. 898-905, Interscience Publishers, New York (1950).

Toutes les amines à substitution polyalcène ci-dessus, ou les amines dont elles dérivent, qui sont des amines secondaires ou primaires, peuvent être alkylées en amines tertiaires au moyen d'agents d'alkylation avant d'être mises à réagir avec les agents de quaternisation pour former les additifs de type sel d'ammonium quaternaire de la présente invention. Comme agents d'alkylation convenables, on peut citer les agents de quaternisation indiqués ci-dessous.

Les sels d'ammonium quaternaire d'amines à substitution polyalcène de la présente invention sont formés par combinaison du produit de réaction décrit ci-dessus (l'amine à substitution polyalcène, comportant au moins une fonction amine tertiaire) avec un agent de quaternisation approprié pour convertir la fonction amine tertiaire en azote quaternaire. Des agents de quaternisation convenables sont détaillés ci-dessous. A titre d'exemple non limitatif, une préparation d'un sel d'ammonium quaternaire d'amine à substitution polyalcène est présentée ci-dessous.

Exemple Q-3

Un appareil approprié au maniement du chlore et du chlorure d'hydrogène gazeux (réacteur en verre, agitateur en verre, joints en PTFE, thermopuits en verre pour thermocouple) est raccordé à des laveurs à hydroxyde de sodium. La cuve en verre est chargée avec du polyisobutylène à faible teneur en vinylidène de Mn 1000 (PIB, 100 grammes) et est chauffée à 110-120°C. On fait barboter du chlore (70 grammes) dans le réacteur en l'espace de 7 heures. Le mélange réactionnel est ensuite balayé avec de l'azote à 110-120°C pendant une nuit pour éliminer HCl.

Le chlorure de PIB résultant est transféré dans un autoclave et l'autoclave est scellé. Pour chaque mole (~1030g) de chlorure de PIB, on ajoute 1 mole de diméthylamine gazeuse (DMA, 45g) et on chauffe la réaction à 160-170°C et on la maintient à cette température pendant 8 heures, ou jusqu'à ce que l'on n'observe plus de baisse de pression. La réaction est refroidie à la température ambiante et la pression est relâchée. On ajoute suffisamment de solvant Solvesso™ 150 pour avoir une solution à 70% en poids de substances actives et on agite la réaction jusqu'à ce qu'elle soit homogène. La solution de polyisobutène-diméthylamine (PIB-DMA) résultante est transférée dans une ampoule à brome et lavée deux fois avec une solution d'hydroxyde de sodium 2M, pour éliminer HCl et NaCl. Après séparation, le produit est séché sur $MgSO_4$ et est filtré à travers une couche de Celite™ (Terre de diatomée).

La solution de PIB-DMA résultante (41 grammes de solution à 70% de substances actives) est chargée dans un réacteur en verre et agitée à température ambiante. Du sulfate de diméthyle (3,3 grammes) est ajouté goutte à goutte en l'espace d'une minute pour donner le sel d'ammonium quaternaire. Le mélange est agité à température ambiante pendant 1 heure sous une couverture d'azote et est échantillonné et titré avec un indicateur vert de bromocrésol. Le composé résultant est un détergent de type sel d'ammonium quaternaire d'une amine à substitution polyalcène.

Sel de Mannich d'ammonium quaternaire

Dans un mode de réalisation, le sel d'ammonium quaternaire est le produit de réaction

(i) (c) d'un produit de réaction de Mannich et
(ii) d'un agent de quaternisation approprié pour convertir la fonction amine tertiaire du composé (i) en azote quaternaire.

Les produits de réaction de Mannich convenables possèdent au moins une fonction amine tertiaire et sont préparés par réaction d'un phénol à substitution hydrocarbonée, d'un aldéhyde et d'une amine.

Le substituant hydrocarboné du phénol à substitution hydrocarbonée peut comporter 10 à 400 atomes de carbone, dans un autre cas 30 à 180 atomes de carbone, et dans un autre cas encore 10 ou 40 à 110 atomes de carbone. Ce substituant hydrocarboné peut être dérivé d'une oléfine ou d'une polyoléfine. Comme oléfines utiles, on peut citer les alpha-oléfines, telles que le 1-décène, qui sont disponibles dans le commerce. Comme polyoléfines convenables, on peut citer celles décrites dans les paragraphes qui précèdent. Le phénol à substitution hydrocarbonée peut être préparé par alkylation d'un phénol avec une de ces oléfines ou polyoléfines appropriées, telles qu'un polyisobutylène ou un polypropylène, au moyen de procédés d'alkylation bien connus.

L'aldéhyde utilisé pour former le détergent de Mannich peut comporter 1 à 10 atomes de carbone, et est généralement le formaldéhyde ou un de ses équivalents réactifs, tels que la formaline ou le paraformaldéhyde.

L'amine utilisée pour former le détergent de Mannich peut être une monoamine ou une polyamine. Les amines appropriées pour préparer le produit de réaction de Mannich de l'invention sont les mêmes que celles décrites dans les paragraphes qui précèdent.

Dans un mode de réalisation, le détergent de Mannich est préparé par réaction d'un phénol à substitution hydrocarbonée, d'un aldéhyde et d'une amine, comme décrit dans le brevet US 5 697 988.

Dans un mode de réalisation, le produit de réaction de Mannich est préparé à partir d'un alkylphénol dérivé d'un polyisobutylène, de formaldéhyde et d'une monoamine primaire, d'une monoamine secondaire ou d'une alkylènediamine.

Dans certains de ces modes de réalisation, l'amine est l'éthylènediamine ou la diméthylamine. On trouvera d'autres procédés de préparation convenables de produits de réaction de Mannich dans les brevets US 5 876 468 et 5 876 468.

Comme on l'a indiqué ci-dessus, il peut être nécessaire, avec certaines des amines, de faire réagir ensuite le produit de réaction de Mannich avec un époxyde ou un carbonate, ou un autre agent d'alkylation, afin d'obtenir la fonction amine tertiaire.

Les sels d'ammonium quaternaire de Mannich de la présente invention sont formés par combinaison du produit de réaction décrit ci-dessus (le produit de réaction de Mannich comportant au moins une fonction amine tertiaire) avec un agent de quaternisation approprié pour convertir la fonction amine tertiaire en azote quaternaire. Des agents de quaternisation convenables sont détaillés ci-dessous. A titre d'exemple non limitatif, une préparation d'un sel d'ammonium quaternaire de Mannich est présentée ci-dessous.

Exemple Q-4

Du phénol alkylé (800 g), qui est quant à lui préparé à partir de polyisobutylène de Mn 1000, et de l'huile diluante SO-44 (240 g) sont chargés dans un réacteur conformément à la description ci-dessus. Une couverture d'azote est appliquée à la cuve et le mélange est agité à 100 tours/min. A ce mélange, on ajoute (goutte à goutte) de la formaline (55,9 g) pendant 50 minutes. Après cela, on ajoute (goutte à goutte) de la diméthylamine (DMA, 73,3 g) pendant les 50 minutes suivantes. Le mélange est chauffé à 68°C et maintenu pendant une heure à cette température. Le mélange est ensuite chauffé à 106°C et maintenu pendant 2 heures de plus à cette température. La température du mélange est ensuite portée à 130°C et maintenue pendant 30 minutes à cette température avant de laisser le mélange revenir à la température ambiante. Le mélange est purifié par distillation sous vide (à 130°C et -0,9 bar) pour éliminer l'eau restant éventuellement, pour donner un DMA de Mannich.

Le DMA de Mannich (1700 g) est introduit dans un réacteur. De l'oxyde de styrène (263 g), de l'acide acétique (66 g) et du méthanol (4564 g) sont ajoutés à la cuve et le mélange est chauffé sous agitation au reflux (~75°C) pendant 6,5 heures sous une couverture d'azote. La réaction est purifiée par distillation sous vide (à 30°C et -0,8 bar). Le composé résultant est un détergent de type sel d'ammonium quaternaire de Mannich.

Agent de quaternisation

Comme agents de quaternisation convenables pour préparer l'un quelconque des détergents de type sel d'ammonium quaternaire décrits ci-dessus, on peut citer les sulfates de dialkyle, les halogénures de benzyle, les carbonates à substitution hydrocarbonée, les époxydes à substitution hydrocarbonée utilisés en combinaison avec un acide, ou des mélanges de ceux-ci.

Dans un mode de réalisation, l'agent de quaternisation comprend : des halogénures tels que chlorure, iodure ou bromure ; des hydroxydes ; des sulfonates ; des sulfates d'alkyle tels que du sulfate de diméthyle ; des sultones ; des phosphates ; des alkylphosphates en $C_{1-12}$, des di-alkylphosphates en $C_{1-12}$ ; des borates ; des alkylborates en $C_{1-12}$ ; des nitrites ; des nitrates ; des carbonates, des bicarbonates, des alcanoates, des O,O-di-alkyl(en $C_{1-12}$)dithiophosphates, ou des mélanges de ceux-ci.

Dans un mode de réalisation, l'agent de quaternisation peut être : un sulfate de dialkyle tel que le sulfate de diméthyle, des N-oxydes, des sultones telles que la propane- ou butane-sultone, des halogénures d'alkyle, d'acyle ou d'aralkyle tels que le chlorure, bromure ou iodure de méthyle et d'éthyle ou le chlorure de benzyle, des carbonates à substitution hydrocarbyle (ou alkyle), ou des combinaisons de ceux-ci. Si l'halogénure d'alkyle est le chlorure de benzyle, le noyau aromatique est éventuellement encore substitué par des groupes alkyle ou alcényle.

Les groupes hydrocarbonés (ou alkyle) des carbonates à substitution hydrocarbonée peuvent contenir 1 à 50, 1 à 20, 1 à 10 ou 1 à 5 atomes de carbone par groupe.

Dans un mode de réalisation, les carbonates à substitution hydrocarbonée contiennent deux groupes hydrocarbonés qui peuvent être identiques ou différents. Comme exemples de carbonates à substitution hydrocarbonée appropriés, on peut citer le carbonate de diméthyle ou de diéthyle.

Dans un autre mode de réalisation, l'agent de quaternisation peut être un époxyde à substitution hydrocarbonée, représenté par la formule suivante :

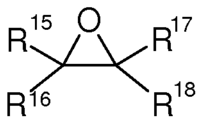

(IX)

dans laquelle $R^{15}$, $R^{16}$, $R^{17}$ et $R^{18}$ peuvent représenter indépendamment H ou un groupe hydrocarboné en $C_{1-50}$. Comme exemples d'époxydes à substitution hydrocarbonée convenables, on peut citer : l'oxyde de styrène, l'oxyde d'éthylène, l'oxyde de propylène, l'oxyde de butylène, l'oxyde de stilbène, les époxydes en $C_{2-50}$, ou des combinaisons de ceux-ci.

Tous les agents de quaternisation décrits ci-dessus, quels qu'ils soient, notamment les époxydes à substitution hydrocarbonée, peuvent être utilisés en combinaison avec un acide. Comme acides convenables, on peut citer les acides carboxyliques, tels que l'acide acétique, l'acide propionique, l'acide butyrique, et analogues.

De préférence, l'agent d'acylation à substitution hydrocarbonée est l'anhydride polyisobutylène succinique et le composé comportant un atome d'oxygène ou d'azote capable de condenser ledit agent d'acylation est choisi parmi la diméthylaminopropylamine, la N-méthyl-1,3-diaminopropane, la N,N-diméthylaminopropylamine, la N,N-diéthylaminopropylamine, la N,N-diméthylaminoéthylamine, la diéthylènetriamine, la dipropylènetriamine, la dibutylènetriamine, la triéthylènetetraamine, la tetraéthylènepentaamine, la pentaéthylènehexaamine, l'hexaméthylènetetraamine et la bis(hexaméthylène)triamine.

## Détergent oxygéné

Dans certains modes de réalisation, les compositions de la présente invention comprennent en outre un additif détergent oxygéné.

L'additif détergent oxygéné peut comprendre un composé hydrocarboné portant au moins deux substituants qui sont des fonctions carboxy sous forme d'acides ou au moins une fonction carboxy sous forme d'anhydride.

Dans certains modes de réalisation, l'additif détergent oxygéné est un composé hydrocarboné portant au moins deux substituants qui sont des fonctions carboxy sous forme d'acides ou d'anhydrides.

Dans d'autres modes de réalisation, l'additif détergent oxygéné est un agent d'acylation succinique à substitution hydrocarbonée.

Dans d'autres modes de réalisation, l'additif détergent oxygéné à substitution hydrocarbonée est un composé acide dimère.

Dans d'autres modes de réalisation encore, l'additif détergent oxygéné à substitution hydrocarbonée de la présente invention comprend une combinaison de deux ou plus de deux des détergents oxygénés décrits dans cette rubrique.

Comme additif détergent oxygéné à substitution hydrocarbonée convenable, on peut citer les acides dimères. Les acides dimères sont un type de polymère diacide dérivé d'acides gras et/ou de polyoléfines, notamment les polyalcènes décrits ici, qui contiennent une fonction acide.

Dans certains modes de réalisation, l'acide dimère utilisé dans la présente invention est dérivé de polyoléfines en $C_{10}$ à $C_{20}$, en $C_{12}$ à $C_{18}$ et/ou en $C_{16}$ à $C_{18}$.

Parmi ces additifs détergents oxygénés à substitution hydrocarbonée, on peut citer les acides, halogénures, anhydrides succiniques, et leurs combinaisons.

Dans certains modes de réalisation, les agents sont des acides ou des anhydrides, et dans d'autres modes de réalisation les agents sont des anhydrides, et dans d'autres modes de réalisation encore les agents sont des anhydrides hydrolysés. Le composé hydrocarboné de l'additif hydrocarbure substitué et/ou le groupe hydrocarboné primaire de l'agent d'acylation succinique à substitution hydrocarbonée contient généralement une moyenne d'au moins 8, ou 30, ou 35 jusqu'à 350, ou jusqu'à 200, ou jusqu'à 100 atomes de carbone.

Dans un mode de réalisation, le groupe hydrocarboné est dérivé d'un polyalcène. Comme polyalcènes convenables, on peut citer les homopolymères et les interpolymères de monomères d'oléfines polymérisables de 2 à 16 ou à 6, ou à 4 atomes de carbone. Comme oléfines et polyoléfines convenables, on peut citer toutes celles décrites dans les rubriques qui précèdent.

Dans certains modes de réalisation, l'oléfine est une monooléfine telle que l'éthylène, le propylène, le 1-butène, l'isobutène et le 1-octène, ou un monomère polyoléfinique, tel qu'un monomère dioléfinique, tel que le 1,3-butadiène et l'isoprène.

Dans un mode de réalisation, l'interpolymère est un homopolymère. Un exemple d'un polymère est un polybutène. Dans un cas particulier, 50% du polybutène proviennent de l'isobutylène. Les polyalcènes sont préparés par des modes opératoires classiques.

Dans un mode de réalisation, les groupes hydrocarbonés sont dérivés de polyalcènes dont la valeur de Mn est d'au moins 1300, ou 1500, ou 1600 jusqu'à 5000, ou jusqu'à 3000, ou jusqu'à 2500, ou jusqu'à 2000, ou jusqu'à

1800, et le rapport Mw/Mn est de 1,5 ou 1,8, ou 2, ou jusqu'à 2,5 à 3,6, ou jusqu'à 3,2.

Dans certains modes de réalisation, le polyalcène est un polyisobutylène ayant une masse moléculaire de 800 à 1200.

Dans un autre mode de réalisation, les agents d'acylation à substitution hydrocarbonée et/ou succinique substitué sont préparés par réaction du polyalcène décrit ci-dessus avec un excès d'anhydride maléique pour donner des agents d'acylation succiniques substitués dans lesquels le nombre de groupes succiniques pour chaque équivalent de poids de groupe substituant est d'au moins 1,3, ou jusqu'à 1,5, ou jusqu'à 1,7, ou jusqu'à 1,8. Le nombre maximum ne dépassera généralement pas 4,5, ou jusqu'à 2,5, ou jusqu'à 2,1, ou jusqu'à 2,0. Le polyalcène peut ici être l'un quelconque de ceux décrits ci-dessus.

Dans un autre mode de réalisation, l'hydrocarbure et/ou le groupe hydrocarboné contient une moyenne de 8, ou 10, ou 12 jusqu'à 40, ou jusqu'à 30, ou jusqu'à 24, ou jusqu'à 20 atomes de carbone.

Dans un mode de réalisation, le groupe hydrocarboné contient une moyenne de 16 à 18 atomes de carbone.

L'oléfine, l'oligomère d'oléfine ou le polyalcène peut être mis à réagir avec le réactif carboxylique de telle sorte qu'il y ait au moins une mole de réactif carboxylique par mole d'oléfine, d'oligomère d'oléfine ou de polyalcène qui réagisse.

Comme exemples de brevets décrivant divers modes opératoires permettant de préparer des agents d'acylation utiles, on peut citer les brevets US 3 172 892, 3 215 707, 3 219 666, 3 231 587, 3 912 764, 4 110 349 et 4 234 435.

Dans certains modes de réalisation, les détergents oxygénés à substitution hydrocarbonée et/ou les agents d'acylation succiniques à substitution hydrocarbonée contiennent une fonction diacide.

Dans certains modes de réalisation, le groupe hydrocarboné de l'agent d'acylation succinique à substitution hydrocarbonée est dérivé de polyisobutylène et la fonction diacide de l'agent est dérivée de groupes acides carboxyliques, tels que d'un acide succinique à substitution hydrocarbonée.

Dans certains modes de réalisation, l'agent d'acylation à substitution hydrocarbonée comprend un ou plusieurs groupes anhydride succinique à substitution hydrocarbonée.

Dans certains modes de réalisation, l'agent d'acylation à substitution hydrocarbonée comprend un ou plusieurs groupes anhydride succinique à substitution hydrocarbonée hydrolysés.

Dans certains modes de réalisation, le détergent oxygéné est un composé polyisobutylène comportant un groupe de tête anhydride succinique ou acide succinique.

Le détergent oxygéné peut être un anhydride polyisobutylène succinique et/ou une version hydrolysée de celui-ci. La préparation de détergents oxygénés appropriés est décrite dans la demande de brevet international WO 2006/063161 A2.

A titre d'exemple non limitatif, les préparations de deux détergents oxygénés sont présentées ci-dessous.

Exemple O-1

Du Glissopal™ 1000 (18,18 kg) est chargé dans une cuve scellée à 100°C et agité. La cuve est chauffée à 167°C et un vide est appliqué. La cuve est ensuite pressurisée avec une atmosphère d'azote (1 bar) pendant qu'elle est chauffée à 175°C. Une fois que le produit a atteint 175°C, de l'anhydride maléique (2,32 kg) est ajouté à l'aide d'une pompe à seringue à double enveloppe chauffante (pompe ISCO) en l'espace d'environ 9 heures. La température réactionnelle est élevée lentement, pendant toute la durée de l'alimentation de l'anhydride maléique, de 175°C pour atteindre 225°C à la fin de la charge. La réaction est ensuite maintenue à 225°C pendant encore 10 heures. L'anhydride polyisobutylène succinique (PIBSA) résultante possède une viscosité cinématique à 100°C de 570 cSt (mm/s) et un indice d'acide total (TAN) de 127 mg KOH/g.

Exemple 0-2

Le PIBSA de l'exemple O-1 (340 g) est chargé dans un réacteur et mélangé avec du Pilot™ 900 (60 g). Le contenu de la cuve est agité à 400 tours/min pendant 1 heure, puis chauffé à 90°C. La cuve est ensuite chargée d'azote pour fournir une atmosphère inerte. De l'eau (5,9 g) est ajoutée au mélange en l'espace de 10 minutes. Le mélange est ensuite agité pendant 2 heures. Le PIBSA hydrolysé résultant possède un indice d'acide total de 163 mg/KOH et une viscosité cinématique à 100°C de 500 mm/s (cSt). Le produit formé contient 85% en poids de produit hydrolysé et 15% en poids de Pilot® 900. Le rapport carbonyle/eau est de 0,5/1.

Lorsque les compositions détergentes de la présente invention contiennent à la fois un détergent de type sel d'ammonium quaternaire et un détergent oxygéné, le rapport pondéral du détergent de type sel d'ammonium quaternaire au détergent oxygéné peut être de 1/10 à 10/1, 1/8 à 8/1, 1/1 à 8/1 ou 3/1 à 7/1, tous les rapports pondéraux étant calculés sur une base sans solvant. Dans d'autres modes de réalisation, le rapport pondéral peut être de 2/1 à 4/1.

Comme on l'entend ici, le terme "substituant hydrocarboné" ou "groupe hydrocarboné" est utilisé dans son sens ordinaire, qui est bien connu de l'homme du métier. Pour être plus précis, il désigne un groupe comportant un atome de carbone fixé directement sur le reste de la molécule et ayant un caractère principalement hydrocarboné.

Comme exemples de groupes hydrocarbonés, on peut citer : les substituants hydrocarbonés, c'est-à-dire les substituants aliphatiques (par exemple alkyle ou alcényle), alicycliques (par exemple cycloalkyle, cycloalcényle) et les substituants aromatiques à substitution aromatique, aliphatique et alicyclique, ainsi que les substituants cycliques dans lesquels le noyau est complété par une autre partie de la molécule (par exemple deux substituants forment ensemble un noyau) ; les substituants hydrocarbonés substitués, c'est-à-dire les substituants contenant des groupes non hydrocarbonés qui, dans le contexte de cette invention, ne modifient pas la nature principalement hydrocarbonée du substituant (par exemple halogéno (tout spécialement chloro et fluoro), hydroxy, alcoxy, mercapto, alkylmercapto, nitro, nitroso et sulfoxy) ; les hétéro-substituants, c'est-à-dire les substituants qui, tout en ayant un caractère principalement hydrocarboné, dans le contexte de cette invention, contiennent autre chose que du carbone dans un noyau ou une chaîne composée par ailleurs d'atomes de carbone. Comme hétéroatomes, on peut citer le soufre, l'oxygène, l'azote, et cela couvre des substituants comme pyridyle, furyle, thiényle et imidazolyle. En général, pas plus de deux, de préférence pas plus d'un, substituant non hydrocarboné ne sera présent par groupe de 10 atomes de carbone dans le groupe hydrocarboné, et typiquement il n'y aura pas de substituants non hydrocarbonés dans le groupe hydrocarboné.

La présente invention concerne également un procédé de préparation de la composition selon l'invention, ledit procédé comprenant une étape de mise en contact et de mélange d'un détergent et d'une dispersion selon l'invention, ce par quoi on obtient la composition.

La composition de l'invention, c'est-à-dire la composition contenant l'additif d'aide à la régénération du FAP sous la forme d'une dispersion de particules d'un composé du fer sous forme cristallisée et le détergent, peut être obtenue en mélangeant la composition détergente et la dispersion par tout moyen conventionnel permettant le mélange, ce mélange étant généralement obtenu par agitation à température proche de la température ambiante (de 15 à 30°C).

Le ratio pondéral entre la dispersion et la composition détergente peut varier grandement en fonction de différents paramètres comme les caractéristiques du moteur et de ses équipements notamment les injecteurs carburant, ses émissions polluantes, notamment la quantité de suies émises, l'architecture de la ligne d'échappement et de dépollution, notamment l'utilisation d'un FAP ou d'un Filtre Catalysé contenant un catalyseur et sa promixité du collecteur du moteur, les moyens permettant d'augmenter la température pour déclencher la régénération ou encore la zone géographique dans laquelle le véhicule circulera, cette dernière définissant la qualité du carburant qu'utilisera le véhicule.

Ce ratio pondéral entre la dispersion et la composition détergente peut typiquement varier entre 10/90 et 90/10, dans certains cas entre 20/80 et 80/20, et dans certains cas encore plus précis entre 30/70 et 70/30. Le ratio peut être avantageusement choisi au-delà de 50/50 c'est-à-dire avec une plus large proportion de dispersion que de détergent.

Dans la composition de la présente invention, la teneur en fer peut être comprise entre 0,05 % et 25%, plus particulièrement entre 2% et 15%, cette concentration étant exprimée en % poids de fer métal par rapport au poids total de la composition.

Les dispersions organiques selon l'invention ont la particularité, une fois additivées au carburant, de ne pas réduire de façon conséquente la stabilité dudit carburant, en particulier lorsque celui-ci contient des fractions peu stables comme des fractions de biocarburants comme les esters méthyliques d'huiles végétales. La stabilité du carburant peut se mesurer au travers de sa résistance à l'oxydation.

Pour cela plusieurs types de test sont connus de la profession. On peut citer le test basé sur la norme NF EN 15751 (Carburants pour automobiles - Esters méthyliques d'acides gras (EMAG) et mélanges avec gazole - Détermination de la stabilité à l'oxydation par méthode d'oxydation accélérée) consistant à oxyder le carburant chauffé par un bullage d'air. Les vapeurs produites durant le processus d'oxydation sont condensées dans de l'eau. Une augmentation de la conductivité électrique de cette eau traduit une solubilisation de composés acides volatiles formés lors du processus d'oxydation du carburant et par là son oxydation. On parle alors de temps d'induction, temps représentant la durée de chauffage nécessaire pour voir apparaître une augmentation rapide de la conductivité électrique. Plus ce temps d'induction est élevée, plus le carburant résiste à l'oxydation. Ce test est aussi appelé test RANCIMAT.

Un autre type de test consiste à quantifier par dosage chimique (tel que selon la norme ISO 6619), l'augmentation d'acidité du carburant chauffé suite au bullage d'oxygène (test de vieillissement EN ISO 12205 (produits pétroliers - Détermination de la stabilité à l'oxydation des distillats moyens du pétrole (1996)). L'évolution de l'acidité est exprimée en fonction de la différence d'acidité ou de $\Delta$TAN entre le carburant vieilli et non vieilli. Plus le $\Delta$TAN est élevé, plus le carburant a été oxydé.

L'invention concerne également un carburant additivé comprenant un carburant et une composition selon l'invention.

L'invention concerne également un procédé de préparation d'un carburant additivé selon l'invention, comprenant une étape de mise en contact et de mélange d'un carburant et d'une composition selon l'invention, ce par quoi on obtient le carburant additivé.

Les compositions selon l'invention peuvent être utilisées comme additif de carburant pour moteurs à combustion interne, plus particulièrement comme additif des gazoles pour moteur diesel ou autre moteur comme certains moteurs à essence émettant des suies ou particules carbonées, et par exemple comme additifs de biocarburants.

Elles peuvent plus généralement être utilisées comme additifs de combustion dans les combustibles ou carburants liquides des générateurs énergétiques tels que moteurs à combustion interne (moteurs à explosion), groupes électrogènes, brûleurs à mazout, ou propulseurs à réaction.

Les carburants additivés selon l'invention peuvent être utilisés en association avec un FAP ne contenant pas de catalyseur, ou bien avec un FAP contenant un catalyseur, comme un CSF.

La nature du catalyseur composant le CSF peut être de tout type notamment à base de métaux précieux comme le platine ou le palladium associé à différents matériaux support ou liant comme l'alumine. Des matériaux réductibles comme les oxydes à base de terres rares, comme l'oxyde de cérium ou les oxydes à base de manganèse peuvent être également associés.

Les compositions selon l'invention, ou Fuel Borne Catalyst (FBC), peuvent être additivées aux carburants selon tout moyen connu de l'homme de l'art, aussi bien par un dispositif de vectorisation embarqué sur le véhicule mais aussi additivées directement dans le carburant avant que celui-ci ne soit introduit sur le véhicule. Ce dernier cas peut être avantageusement utilisé dans le cas de flottes de véhicules équipés de FAP et disposant de leur propre station service pour refaire les pleins de carburant.

Les dispositifs embarqués sur le véhicule peuvent notamment être des dispositifs comprenant un réservoir, permettant d'embarquer un volume de la composition selon l'invention et permettant de couvrir une certaine autonomie, ainsi qu'un moyen de vectorisation de la composition vers le carburant comme une pompe doseuse injectant une quantité définie de la composition dans le réservoir à carburant du véhicule et un outil de pilotage du moyen de vectorisation.

Le moteur peut être alimenté en continu par un carburant additivé en FBC, la concentration pouvant être stable ou variable dans le temps. Le moteur peut aussi être alimenté alternativement par un carburant additivé et non-additivé. La quantité de FBC à ajouter au carburant peut varier grandement en fonction de différents paramètres comme les caractéristiques du moteur et de ses équipements, ses émissions polluantes, notamment la quantité de suies émises, l'architecture de la ligne d'échappement et de dépollution, notamment l'utilisation d'un FAP ou d'un CSF contenant un catalyseur et sa promixité du collecteur du moteur, les moyens permettant d'augmenter la température pour déclencher la régénération ou encore la zone géographique dans laquelle le véhicule circulera, cette dernière définissant la qualité du carburant qu'utilisera le véhicule.

Le FBC peut aussi être injecté dans la ligne d'échappement en amont du FAP, de préférence par un moyen permettant de disperser au final les particules dans le lit de suies. Ce cas est particulièrement adapté au cas où la régénération du FAP se fait par injection directe de carburant dans la ligne d'échappement en amont du FAP, que ce carburant soit brûlé sur un catalyseur d'oxydation en amont du FAP ou bien par un brûleur ou par tout autre moyen.

De préférence, le carburant compris dans le carburant additivé est choisi parmi le groupe constitué des gazoles et des biocarburants.

Les carburants appropriés à la préparation d'un carburant additivé selon la présente invention comprennent notamment les carburants disponibles dans le commerce et, dans certains modes de réalisation, tous les carburants gazoles et/ou biocarburants disponibles dans le commerce.

Les carburants gazoles peuvent aussi être appelés carburants diesels.

Les biocarburants sont également appelés biofuels.

Les carburants appropriés à la mise en oeuvre de la présente invention ne sont pas trop limités, et sont généralement liquides à température ambiante, par exemple de 20 à 30°C.

Le carburant liquide peut être un carburant de type hydrocarbure, un carburant de type autre qu'un hydrocarbure, ou un de leurs mélanges.

Le carburant de type hydrocarbure peut être un distillat pétrolier, notamment une essence selon la définition donnée par la norme ASTM D4814, ou un carburant gazole, selon la définition donnée par la norme ASTM D975 ou la norme européenne EN590+A1.

Dans un mode de réalisation, le carburant liquide est une essence, et dans un autre mode de réalisation le carburant liquide est une essence sans plomb.

Dans un autre mode de réalisation, le carburant liquide est un carburant gazole.

Le carburant de type hydrocarbure peut être un hydrocarbure préparé par un procédé de transformation d'un gaz en liquide pour inclure, par exemple, des hydrocarbures préparés par un procédé tel que le procédé de Fischer-Tropsch.

Dans certains modes de réalisation, le carburant mis en oeuvre dans la présente invention est un carburant gazole, un biocarburant gazole, ou des combinaisons de ceux-ci.

Le carburant de type autre qu'un hydrocarbure peut être une composition contenant des atomes d'oxygène, que l'on appelle souvent un produit d'oxygénation, qui comprend un alcool, un éther, une cétone, un ester d'un acide carboxylique, un nitroalcane, ou un de leurs mélanges. Le carburant de type autre qu'un hydrocarbure peut comprendre par exemple du méthanol, de l'éthanol, du méthyl-t-butyléther, de la méthyléthylcétone, des huiles et/ou des graisses trans-estérifiées d'origine végétale ou animale comme l'ester méthylique de colza et l'ester méthylique de soja, et le nitrométhane.

Les mélanges de carburants de type hydrocarbure et de type autre qu'un hydrocarbure peuvent comprendre,

par exemple, de l'essence et du méthanol et/ou de l'éthanol, du carburant gazole et de l'éthanol, et du carburant gazole et une huile végétale trans-estérifiée comme l'ester méthylique de colza et d'autres carburants bio-dérivés.

Dans un mode de réalisation, le carburant liquide est une émulsion d'eau dans un carburant de type hydrocarbure, un carburant de type autre qu'un hydrocarbure, ou un de leurs mélanges.

Dans plusieurs modes de réalisation de cette invention, le carburant liquide peut avoir une teneur en soufre, sur une base pondérale, qui est de 5 000 ppm ou moins, de 1 000 ppm ou moins, de 300 ppm ou moins, de 200 ppm ou moins, de 30 ppm ou moins, ou de 10 ppm ou moins.

Le carburant liquide de l'invention est présent dans un carburant additivé selon l'invention en quantité prépondérante, c'est-à-dire généralement supérieure à 95% en poids, et dans d'autres modes de réalisation il est présent en quantité supérieure à 97% en poids, supérieure à 99,5% en poids, ou supérieure à 99,9% en poids.

Les carburants appropriés à la mise en oeuvre de la présente invention comprennent éventuellement un ou plusieurs additifs de performance supplémentaires, des solvants ou des diluants. Ces additifs de performance peuvent être de tout type et permettent par exemple l'amélioration de la distribution du carburant dans le moteur et/ou l'amélioration des performances du fonctionnement du moteur et/ou l'amélioration de la stabilité du fonctionnement du moteur.

On peut citer à titre d'exemple sans être limitatif les antioxydants comme le phénol stériquement encombré, les additifs détergents et/ou dispersants comme les détergents azotés ou les succinimides ou encore les agents améliorant l'écoulement à froid tel qu'un copolymère d'anhydride maléique et de styrène estérifié.

Les compositions de la présente invention peuvent en outre comprendre un ou plusieurs additifs de performance supplémentaires, des solvants ou des diluants.

Les additifs de performance supplémentaires peuvent comprendre : un antioxydant tel qu'un phénol à empêchement stérique ou un de ses dérivés et/ou une diarylamine ou un de ses dérivés ; un inhibiteur de corrosion ; et/ou un additif détergent/dispersant, autre que l'additif pour carburant de la présente invention, tel qu'une polyétheramine ou un détergent azoté, notamment, mais sans limitation, des détergents/dispersants PIB-amine et des détergents/dispersants succinimide.

Les additifs de performance supplémentaires peuvent aussi couvrir : un agent améliorant l'écoulement à froid tel qu'un copolymère d'anhydride maléique et de styrène estérifié et/ou un copolymère d'éthylène et d'acétate de vinyle ; un inhibiteur de mousse et/ou un agent antimousse tel qu'une huile de silicone ; un désémulsifiant tel qu'un alcool polyalcoxylé ; un agent d'onctuosité tel qu'un acide gras carboxylique ; un désactivateur de métaux tel qu'un triazole aromatique ou un de ses dérivés, notamment, mais sans limitation, le benzotriazole ; et/ou un additif contre la récession des sièges de soupape tel qu'un sel sulfosuccinate de métal alcalin.

La quantité totale combinée des composés additifs de performance supplémentaires présents, sur une base sans solvant/huile, peut s'échelonner de 0 ou 0,01% en poids à 65, 50, voire 25% en poids, ou de 0,01% en poids à 20% en poids de la composition. Même si un ou plusieurs des autres additifs de performance peuvent être présents, il est courant que les autres additifs de performance soient présents en différentes quantités les uns par rapport aux autres.

L'invention concerne également une méthode de mise en oeuvre d'un moteur à combustion interne comprenant une étape d'acheminement audit moteur d'un carburant et d'une composition selon l'invention.

Dans un mode de réalisation, la composition de l'invention est combinée avec le carburant par addition directe et le carburant additivé est utilisé pour faire fonctionner un moteur équipé d'un système d'échappement avec un FAP ou un CSF.

Le carburant additivé contenant la composition de l'invention peut être contenu dans un réservoir de carburant, transmis au moteur où il est brûlé, et les particules d'oxyde de fer réduisent la température d'oxydation des suies recueillies dans le FAP.

Dans un autre mode de réalisation, on fait appel au mode opératoire ci-dessus, sauf que la composition de l'invention est maintenue à bord de l'appareil mû par le moteur (par exemple une automobile, un autobus, un camion, etc.) dans un réservoir à composition séparé du carburant. Dans ces modes de réalisation, la composition est combinée ou mélangée avec le carburant pendant le fonctionnement du moteur. Comme autres techniques, on peut aussi ajouter la composition de l'invention au carburant et/ou au réservoir de carburant, ou au niveau des dépôts de carburant avant de remplir le réservoir du véhicule motorisé.

La composition de l'invention peut être ajoutée au carburant en quantité telle que la teneur massique en fer dans le carburant additivé soit comprise de 1 ppm à 50 ppm, plus particulièrement de 2 ppm à 20 ppm, en fer métal par rapport à la masse totale du carburant.

Lorsque l'invention est utilisée comme composition de carburant liquide pour un moteur à combustion interne, des moteurs à combustion interne appropriés couvrent les moteurs à allumage par étincelle et les moteurs à allumage par compression ; les cycles à 2 temps ou à 4 temps ; un carburant liquide obtenu par injection directe, injection indirecte, injection par gicleur et carburateur ; les systèmes courants d'injecteur à rail et d'injecteur-pompe ; les moteurs pour véhicules légers (par exemple voiture de tourisme) et véhicules lourds (par exemple camion commercial) ; et les moteurs qui marchent avec des carburants de type hydrocarbure et de type autre qu'un hydrocarbure et des mélanges de ceux-ci. Les moteurs peuvent faire partie de systèmes à émission intégrée renfermant des éléments comme les systèmes

EGR ; un après-traitement y compris un catalyseur trois voies, un catalyseur d'oxydation, des absorbeurs de NOx et des catalyseurs, des pièges à particules catalysés et non catalysés ; une distribution variable ; et une synchronisation de l'injection et une configuration du débit.

On sait que certains des produits décrits ci-dessus peuvent interagir dans la formulation finale, de sorte que les constituants de la formulation finale peuvent être différents de ceux qui sont ajoutés initialement. Les produits ainsi formés, notamment les produits formés à l'aide de la composition de la présente invention dans son utilisation envisagée, peuvent ne pas être facilement décrits. Néanmoins, toutes ces variantes et tous ces produits de réaction entrent dans le cadre de la présente invention ; la présente invention couvre la composition préparée par mélange des constituants décrits ci-dessus.

EXEMPLES

**Exemple 1** : **Préparation des dispersions**

**Dispersion 1A**

Préparation de la solution de précurseurs de fer

Un litre de solution est préparé de la manière suivante : 576 g de $Fe(NO_3)_3$ sont mélangés avec 99,4 g de $FeCl_2$, 4 $H_2O$. Le mélange est complété avec de l'eau distillée pour obtenir un litre de solution. La concentration finale de cette solution de précurseurs de fer est de 1,5 $mol.L^{-1}$ en Fe.

Préparation de la solution de soude

Une solution de NaOH à 6 $mol.L^{-1}$ est préparée de la manière suivante : 240 g de pastilles de soude sont dilués dans de l'eau distillée pour obtenir un litre de solution.

Dans un réacteur d'un litre équipé d'un système d'agitation, un pied de cuve composé de 400 mL de solution de nitrate de sodium $NaNO_3$ à 3 $mol.L^{-1}$ est introduit. Le pH de la solution est ajusté à 11 à l'aide de quelques gouttes de soude à 6 mol/L. La formation du précipité se fait par ajout simultané de la solution de précurseurs de fer et de la solution de soude préparées précédemment. Les débits d'introduction de ces deux réactifs sont ajustés de sorte que le pH soit maintenu constant et égal à 11 à température ambiante.

823,8 g de la solution obtenue par précipitation (soit 21,75 g d'un équivalent $Fe_2O_3$ ou encore 0,27 mol de Fe) préalablement neutralisée, sont redispersés dans une solution contenant 24,1 g d'acide isostéarique (Prisorine 3501 fournie par Croda) et 106,4 g d'Isopar L. La suspension est introduite dans un réacteur double enveloppe équipé d'un bain thermostaté et muni d'un agitateur. L'ensemble réactionnel est porté à 90°C pendant 4h.

Après refroidissement, on transfère le mélange dans une éprouvette. On observe une démixtion et on recueille une phase aqueuse de 500 mL et une phase organique de 100 mL.

Cette dispersion organique possède une teneur massique en fer de 10%, exprimée en masse de fer métal par rapport à la masse totale de la dispersion recueillie. La teneur en fer est déterminée par analyse par fluorescence X directement sur la dispersion. Cette même technique est utilisée dans la suite des exemples pour contrôler la teneur en fer.

**Dispersion 1B**

Préparation de la solution de précurseurs de fer

Un litre de solution est préparé de la manière suivante : 576 g de $Fe(NO_3)_3$ sont mélangés avec 99,4 g de $FeCl_2$, 4 $H_2O$. Le mélange est complété avec de l'eau distillée pour obtenir un litre de solution. La concentration finale de cette solution de précurseurs de fer est de 1,5 $mol.L^{-1}$ en Fe.

Préparation de la solution de soude

Une solution de NaOH à 6 $mol.L^{-1}$ est préparée de la manière suivante : 240 g de pastilles de soude sont dilués dans de l'eau distillée pour obtenir un litre de solution.

Dans un réacteur d'un litre équipé d'un système d'agitation, un pied de cuve composé de 400 mL de solution de nitrate de sodium $NaNO_3$ à 3 $mol.L^{-1}$ est introduit. Le pH de la solution est ajusté à 13 à l'aide de quelques gouttes de soude à 6 mol/L. La formation du précipité se fait par ajout simultané de la solution de précurseurs de fer et de la solution de soude préparées précédemment. Les débits d'introduction de ces deux réactifs sont ajustés de sorte que le pH soit maintenu constant et égal à 13 à température ambiante.

823,8 g de la solution obtenue par précipitation (soit 21,75 g d'un équivalent $Fe_2O_3$ ou encore 0,27 mol de Fe) préalablement neutralisée, sont redispersés dans une solution contenant 24,1 g d'acide isostéarique (Prisorine 3501, coupe fournie par Croda) et 106,4 g d'Isopar L. La suspension est introduite dans un réacteur double enveloppe équipé d'un bain thermostaté et muni d'un agitateur. L'ensemble réactionnel est porté à 90°C pendant 4h.
Après refroidissement, on transfère le mélange dans une éprouvette. On observe une démixtion et on recueille une phase aqueuse de 500 mL et une phase organique de 100 mL.
Cette dispersion organique possède une teneur massique en fer de 10%, exprimée en masse de fer métal par rapport à la masse totale de la dispersion recueillie.

Caractérisation par diffraction des rayons X (DRX)

L'analyse par DRX des dispersions de l'Exemple 1 a été réalisée selon les indications données dans la description.
On constate que les pics des diffractogrammes de la dispersion 1A et de la dispersion 1B correspondent bien aux pics de diffraction DRX caractéristiques de la phase cristallisée magnétite et/ou maghémite (fiche ICDD 01-088-0315).
Le calcul de la taille de cristallite suivant la méthode présentée précédemment conduit à des tailles de cristallites respectivement de 9 nm pour la dispersion 1A et de 4 nm pour la dispersion 1B.

Caractérisation par Microscopie Electronique à Transmission (MET)

L'analyse par MET a été réalisée selon les indications données dans la description.
Les caractéristiques issues de ce comptage en MET : pourcentage de particules inférieures à 7 nm, $\Phi_{50}$, indice de polydispersité $P_n$ tels que définis dans la description sont reportées dans le Tableau 1.

Tableau 1 : Caractérisation par MET des dispersions de l'Exemple 1

| | % de particules < 7 nm | $\Phi_{50}$ (nm) | $P_n$ |
|---|---|---|---|
| Dispersion 1A | 72% | 5,7 nm | 0,35 |
| Dispersion 1B | 95% | 3,8 nm | 0,35 |

Caractérisation par Diffusion dynamique de la lumière (DDL)

L'analyse par DDL a été réalisée selon les indications données dans la description. Les diamètres hydrodynamiques moyens $D_h$ en intensité sont reportés dans le Tableau 2.

Tableau 2 : Caractérisation par DDL des dispersions de l'Exemple 1

| | $D_h$ (nm) |
|---|---|
| Dispersion 1A | 22 |
| Dispersion 1B | 11,6 |

**Exemple 2: Préparation des compositions détergentes**

**Exemple 2A**

On prépare une composition détergente, constituée d'un sel d'ammonium quaternaire de succinimide dérivé de succinimide de diméthylaminopropylamine, d'alcool 2-éthylhexylique et d'acide acétique, et on la soumet à une quaternisation par de l'oxyde de propylène et on la prépare par un procédé essentiellement semblable à celui décrit dans l'Exemple Q-1 ci-dessus.

**Exemple 2B**

On prépare une composition détergente en mélangeant 50 parties en poids du sel d'ammonium quaternaire de succinimide de l'Exemple 2A avec 18 parties en poids d'un détergent oxygéné, toutes les parties en poids étant calculées sur une base sans solvant. Le mélange des constituants est effectué dans les conditions ambiantes. Le

détergent oxygéné est un anhydride polyisobutylène succinique dérivé de polyisobutylène à forte teneur en vinylidène de masse moléculaire moyenne en nombre égale à 1000 et d'anhydride maléique et est préparé par un procédé essentiellement semblable à celui décrit dans l'Exemple O-1.

## Exemple 2C

On prépare une composition détergente selon les modes opératoires de l'Exemple 2B, sauf qu'on utilise 35 parties en poids du sel d'ammonium quaternaire de succinimide avec 9 parties en poids du détergent oxygéné, toutes les parties en poids étant calculées sur une base sans solvant.

## Exemple 2D

On prépare une composition détergente selon les modes opératoires de l'Exemple 2B, sauf que le détergent oxygéné est hydrolysé par réaction avec de l'eau, pour former un acide polyisobutylène succinique préparé par un procédé essentiellement semblable à celui décrit dans l'Exemple O-2.

## Exemple 2E

On prépare une composition détergente selon les modes opératoires de l'Exemple 2A, sauf que le sel d'ammonium quaternaire de succinimide est dérivé de succinimide de diméthylaminopropylamine et de sulfate de diméthyle et est préparé par un procédé essentiellement semblable à celui décrit dans l'Exemple Q-2, sauf que davantage de solvant est présent pour donner un mélange ayant un niveau de substances actives de 65% en poids dans un solvant naphta de pétrole.

## Exemple 2F

On prépare une composition détergente selon les modes opératoires de l'Exemple 2C, sauf que le détergent oxygéné est hydrolysé par réaction avec de l'eau, pour former un acide polyisobutylène succinique préparé par un procédé essentiellement semblable à celui décrit dans l'Exemple O-2.

## Exemple 3 : Préparation des compositions d'additifs de carburant

Huit compositions d'additif de carburant (3A à 3I) consistant en des mélanges des dispersions 1A ou 1B de l'Exemple 1 et des détergents des Exemples 2A ou 2F sont préparées en mélangeant à température ambiante chaque liquide dans des proportions contrôlées.

Ainsi, 42,78 g de la dispersion 1A sont mélangés avec 32,08 g du détergent de l'Exemple 2F et 25,13 grammes de solvant, ledit solvant étant un mélange d'ISOPAR et de 2-éthylhexanol. Le mélange est maintenu sous agitation à 120 tours par minute. L'agitation du mélange est maintenue pendant 30 minutes et la qualité du mélange est contrôlée par la mesure de la teneur en fer en haut et au bas du liquide obtenu.

À la fin des 30 minutes d'agitation, la teneur en fer en haut et au bas du liquide est identique. Cette composition d'additif, appelé par la suite composition 3B, contient 4,3% poids de fer métal.

Les autres compositions sont préparées de la même manière en utilisant des quantités contrôlées des dispersions 1A ou 1B, des détergents de l'Exemple 2A ou 2F et de solvant éventuel.

Le Tableau 3 montre les quantités de chaque composant pour les différentes compositions ainsi que leur teneur en fer.

Tableau 3: composition des additifs et teneur en fer

| composition | dispersion (g) | | détergent (g) | | solvant (g) | % massique de Fe |
|---|---|---|---|---|---|---|
| | Exemple 1A | Exemple 1B | Exemple 2A | Exemple 2F | | |
| 3A | 100 | - | - | - | | 10,0 |
| 3B | 42,78 | - | - | 32,08 | 25,13 | 4,3 |
| 3C | 53,50 | - | - | 26,03 | 20,47 | 5,4 |
| 3D | 64,88 | - | - | 19,72 | 15,40 | 6,5 |
| 3E | - | 42,84 | - | 32,12 | 25,03 | 4,3 |
| 3F | - | 53,50 | - | 26,03 | 20,47 | 5,4 |

(suite)

| composition | dispersion (g) | | détergent (g) | | solvant (g) | % massique de Fe |
|---|---|---|---|---|---|---|
| | Exemple 1A | Exemple 1B | Exemple 2A | Exemple 2F | | |
| 3G | - | 65,29 | - | 19,72 | 15,30 | 6,5 |
| 3H | - | 64,07 | 35,93 | | - | 6,4 |
| 3I | - | 73,27 | 26,73 | - | - | 7,3 |

**Exemple 4: Stabilité des compositions dans un carburant gazole**

Un carburant additivé est préparé afin de mesurer la stabilité des compositions selon l'invention avec ledit carburant. Pour cela, on additionne au carburant une certaine quantité de composition afin d'atteindre une concentration massique de 7 ppm en fer métal dans le carburant. Puis on chauffe en continu le carburant additivé à 70°C et on quantifie la durée de stabilité de la composition d'additif.

La composition d'additif est considérée comme stable lorsque la teneur en fer dans le carburant n'a pas diminué de plus de 10%.

Le carburant utilisé ici est un carburant contenant approximativement 11% massique de biocarburant (ester méthylique d'acide gras ou EMAG) (Tableau 4).

Tableau 4: Caractéristiques principales du carburant B10

| Carburant | | B10 |
|---|---|---|
| composition | | |
| Aromatique | %masse | 24 |
| Poly-aromatique | %masse | 4 |
| EMAG | % volume/volume | 10,8 |
| Soufre | mg/kg | 5 |
| Résidu de carbone (sur le résidu 10% de distillation) | %masse/%masse | < 0,2 |
| Cuivre | mg/kg | 0 |
| Zinc | mg/kg | 0 |

Une quantité précise de chacun des compositions d'additif est ajoutée à 250 ml de carburant de façon à obtenir, après homogénéisation, 7 ppm en fer métal dans le carburant et présence éventuelle d'une ou plusieurs molécules détergentes selon la composition ajoutée :

* composition 3A: 14,8 mg
* composition 3B: 25,9 mg
* composition 3C: 22,0 mg
* composition 3D: 19,3 mg
* composition 3E: 25,9 mg
* composition 3F: 22,0 mg
* composition 3G: 19,2 mg
* composition 3H: 23,1 mg
* composition 3I: 20,2 mg.

L'évolution de la teneur en fer dans le carburant est quantifiée au moyen d'un prélèvement régulier d'un volume de 20 ml de carburant dans la partie supérieure du carburant. Ce volume, une fois filtré à 0,2 $\mu$m, est analysé par Fluorescence X pour déterminer la teneur en fer.

Tableau 5 : Stabilité dans le carburant à 70°C (en jours)

| Carburant additivé | Stabilité dans le carburant |
|---|---|
| composition 3A | 1 |

(suite)

| Carburant additivé | Stabilité dans le carburant |
|---|---|
| composition 3B | > 50* |
| composition 3C | > 50* |
| composition 3D | > 50* |
| composition 3E | > 50* |
| composition 3F | > 50* |
| composition 3G | > 50* |
| composition 3H | > 50* |
| composition 3I | > 50* |
| * « > x » signifie que le test a été volontairement stoppé au bout de x jours à 70°C, sans observer sur x jours d'évolution significative du %Fe | |

On constate (Tableau 5) que les compositions 3B à 3I selon l'invention présentent une stabilité nettement accrue par rapport à la composition 3A sans détergent, puisqu'aucune diminution de la teneur en fer n'est mesurée après 50 jours de chauffage continu à 70°C des carburants additivés. La stabilité des compositions selon l'invention est donc supérieure à 50 jours à 70°C.

**Exemple 5: Compatibilité du carburant et des compositions d'additif**

La compatibilité du carburant de type B10 utilisé dans l'Exemple 4 est mesurée avec addition des compositions d'additif de l'Exemple 3 (3A, 3B, 3C, 3D, 3E, 3F, et 3G).

Pour cela, on additionne au carburant une certaine quantité de dispersion afin d'atteindre une concentration massique de 7 ppm en fer métal dans le carburant, selon le même protocole que celui décrit dans l'Exemple 4.

La compatibilité du carburant a été évaluée en utilisant la norme NF EN 15751 (Carburants pour automobiles - Esters méthyliques d'acides gras (EMAG) et mélanges avec gazole - Détermination de la stabilité à l'oxydation par méthode d'oxydation accélérée).

Pour ce test, un flux d'air sec (10 L/h) bulle dans 7,5 g du carburant chauffé à 110°C. Les vapeurs produites durant le processus d'oxydation sont entrainées par l'air dans une cellule contenant de l'eau déminéralisée et une électrode mesurant la conductivité de l'eau. Cette électrode est connectée à un système de mesure et d'enregistrement. Ce système indique la fin de la période d'induction lorsque la conductivité de l'eau augmente rapidement. Cette augmentation rapide de la conductivité est causée par la solubilisation dans l'eau des acides carboxyliques volatiles formés lors du processus d'oxydation du carburant.

Le Tableau 6 montre qu'en présence des compositions contenant un détergent contenant au moins un sel d'ammonium quaternaire (compositions 3B à 3I), le temps d'induction du carburant additivé est plus élevé que pour le carburant additivé de la composition 3A seule (ne contenant pas de détergent de type ammonium quaternaire), ce qui traduit une moindre oxydation du carburant et ainsi une meilleure compatibilité.

Tableau 6 : Temps d'induction du carburant avec et sans FBC

| | Temps induction (h) |
|---|---|
| composition 3A | 35,6 |
| composition 3B | 42,2 |
| composition 3C | 40,9 |
| composition 3D | 39,8 |
| composition 3E | 41,7 |
| composition 3F | 39,8 |
| composition 3G | 37,9 |

(suite)

| | Temps induction (h) |
|---|---|
| composition 3H | 37,4 |
| composition 3I | 36,7 |

**Exemple 6 : Test moteur de régénération d'un Filtre à Particules**

L'efficacité des dispersions décrites dans les exemples précédents pour régénérer un filtre à particules (FAP) a été mesurée au travers d'essais moteur de régénération de FAP. Pour cela un moteur diesel fourni par le groupe Volkswagen (4 cylindres, 2 litres, turbocompresseur avec refroidissement d'air, 81 kW) a été utilisé sur un banc d'essai moteur.

La ligne d'échappement montée en aval est une ligne commerciale composée d'un catalyseur d'oxydation contenant un washcoat à base de platine et d'alumine suivi d'un FAP en carbure de silicium (FAP : volume total 2,52 L, diamètre 5,66 pouces, longueur 5,87 pouces).

Le carburant utilisé est un carburant commercial répondant à la norme EN590 DIN 51628 contenant moins de 10 ppm de soufre et contenant 7% en volume d'EMAG.

Pour ces tests, le carburant est additivé des différentes compositions 3B et 3E de l'Exemple 3. La teneur en composition ajoutée est ajustée de façon à ajouter dans le carburant une quantité de composition correspondant à 7 ppm poids (composition 3B) ou 5 ppm poids (composition 3E) de fer exprimé sous la forme de fer métal par rapport à la masse totale de carburant. A titre de comparaison un troisième essai a été conduit avec le même carburant mais non additivé de composition.

Le test est réalisé en deux étapes successives : une étape de chargement du FAP, suivie d'une étape de régénération de celui-ci. Les conditions de ces deux étapes sont rigoureusement identiques pour les trois tests, mis à part le carburant utilisé (additivé ou non).

La phase de chargement est effectuée en opérant le moteur à un régime de 3000 tours/min (trm) et en utilisant un couple de 45 Nm pendant approximativement 6 heures. Cette phase de chargement est stoppée quand 12 g de phases particulaires sont chargés dans le FAP. Pendant cette phase la température des gaz en amont du FAP est de 230 à 235°C. Dans ces conditions les émissions de particules sont d'environ 2 g/h.

Après cette phase de chargement, le FAP est démonté et pesé afin de contrôler la masse de particules chargées pendant cette phase (quantité de phase particulaire dans le FAP après chargement du Tableau 7).

Le FAP est ensuite remonté sur le banc et réchauffé par le moteur qui est remis 30 minutes dans les conditions de fonctionnement du chargement (3000 trm / 45 Nm).

Les conditions du moteur sont ensuite modifiée (couple 80 Nm / 2000 trm) et une post-injection est demandée à l'unité électronique centrale du moteur (ECU), ce qui permet de monter la température en amont du FAP à 450°C et de démarrer la régénération du FAP. Ces conditions sont maintenues pendant 35 minutes (2100 secondes), ce temps étant décompté à partir du démarrage de la post-injection.

L'efficacité de régénération du FAP est mesurée au travers de deux paramètres:

- le % suies brûlées, qui correspond au taux de combustion des suies calculé à chaque instant t en fonction de la réduction de la perte de charge ΔP(t) :

$$\%\,suies\,brûlées = \frac{\Delta P(début\ de\ régénération) - \Delta P(t)}{\Delta P(début\ de\ régénération)} \times 100$$

 100% de suies brûlées correspondant à la stabilisation de la perte de charge au niveau le plus bas observé dans ces conditions avec un FAP ne contenant pas de suies. Dans le cas des tests conduits avec le carburant additivé, la perte de charge se stabilise avant la fin du test de régénération ce qui permet de calculer ce critère. Dans le cas du test avec le carburant non additivé, la perte de charge reste élevée et non stabilisée ce qui ne permet pas de calculer ce critère.

- la masse de particules brûlées pendant la régénération, calculée à partir des pesées du FAP avant chargement, après chargement et en fin de régénération.

De manière générale, plus ces paramètres sont élevés, plus la régénération est efficace.

Les résultats sont regroupés dans le Tableau 7.

Tableau 7

| Présence d'un additif dans le carburant | aucun | 3B | 3E |
|---|---|---|---|
| Teneur en fer dans le carburant (Fe ppm poids) | 0 | 7 | 5 |
| Quantité de phase particulaire dans le FAP après chargement (g) | 12,2 | 12,4 | 12,0 |
| Quantité de Fer dans le FAP résultant de l'additif (g) * | 0 | 0,18 | 0,12 |
| Particules brûlées pendant la régénération (35 minutes) (g) | 2,2 | 12,0 | 11,5 |
| Particules brûlées pendant la régénération (35 minutes) (%) | 18 | 97 | 96 |
| Perte de Charge en début de régénération (mbars) | 87,1 | 82,1 | 85,9 |
| Perte de Charge au bout de 35 minutes à 450°C (mbars) | 65,6 | 30,4 | 30,3 |
| % suies brûlées après 5 minutes de régénération | - | 43,4 | 45,9 |
| % suies brûlées après 10 minutes de régénération | - | 82,8 | 83,7 |
| % suies brûlées après 15 minutes de régénération | - | 95,3 | 95,0 |
| % suies brûlées après 20 minutes de régénération | - | 98,7 | 98,1 |
| % suies brûlées après 35 minutes de régénération | - | 100 | 100 |
| * calculé considérant un chargement du FAP pendant 6 heures avec une consommation de carburant de 4 kg/h | | | |

On constate que la présence d'un additif dans le carburant permet d'obtenir la régénération du FAP à 450°C puisque 96 à 97% des suies sont brûlées au bout de 35 minutes à 450°C alors qu'en absence d'additif seul 18% des suies sont brûlées. Il en est de même si l'on observe la perte de charge sur le FAP qui est plus largement réduite en présence d'additif : elle chute dans les deux cas d'environ 83 - 86 mbars à environ 30 mbars alors que sans additif la perte de charge au bout de 35 minutes à 450°C reste supérieure à 65 mbars traduisant une régénération non complète.

Lorsque l'on compare les compositions 3B et 3E, on constate que ces deux compositions conduisent à des cinétiques de combustion voisines si l'on observe l'évolution de la perte de charge à différents temps au travers du calcul % suies brûlées (5, 10, 15, 20 ou 35 minutes) de la régénération à 450°C. Toutefois, cette efficacité est obtenue avec une quantité plus faible d'additif (ici 5 ppm de fer métal) pour l'additif préparé à partir de la dispersion contenant des cristallites de type magnétite et/ou maghémite de plus petite taille (ici 4 nm pour la composition 3E). Lorsque la taille des cristallites est de 9 nm (composition 3B) la quantité à introduire correspond à une teneur en fer métal de 7 ppm poids.

L'ensemble des Exemples illustre que les compositions contenant des cristallites de type magnétite et/ou maghémite de petite taille (typiquement 4 nm) peuvent être très efficaces à bas dosage tout en ne dégradant pas de façon notable le carburant.

## Revendications

1. Utilisation d'une composition comprenant une dispersion et un détergent comprenant un sel d'ammonium quaternaire, ladite dispersion comprenant :

   - une phase organique ;
   - au moins un agent amphiphile, et
   - des objets solides dispersés dans la phase organique, sous forme de particules individualisées ou d'agrégats de particules, constitués d'un composé du fer sous forme cristallisée, tels que lesdites particules présentent une taille moyenne $\overline{D}_{DRX}$ inférieure ou égale à 12 nm mesurée par diffraction des rayons X,

   à titre d'additif de carburant pour moteurs à combustion interne pour l'aide à la régénération d'un FAP.

2. Utilisation selon la revendication 1, dans laquelle la composition comprend en outre un additif détergent oxygéné.

3. Utilisation selon l'une quelconque des revendications 1 ou 2, dans laquelle le sel d'ammonium quaternaire comprend le produit de réaction :

(i) d'au moins un composé qui peut comprendre :

(a) le produit de condensation d'un agent d'acylation à substitution hydrocarbonée et d'un composé comportant un atome d'oxygène ou d'azote capable de condenser l'agent d'acylation, le produit de condensation possédant au moins une fonction amine tertiaire ;
(b) une amine à substitution polyalcène comportant au moins une fonction amine tertiaire ; et
(c) un produit de réaction de Mannich comportant au moins une fonction amine tertiaire, le produit de réaction de Mannich étant dérivé d'un phénol à substitution hydrocarbonée, d'un aldéhyde et d'une aminé ; et

(ii) d'un agent de quaternisation approprié pour convertir la fonction amine tertiaire du composé (i) en azote quaternaire.

**4.** Utilisation selon l'une quelconque des revendications 1 ou 2, dans laquelle le sel d'ammonium quaternaire comprend le produit de la réaction :

(i) du produit de condensation d'un agent d'acylation à substitution hydrocarbonée et d'un composé comportant un atome d'oxygène ou d'azote capable de condenser l'agent d'acylation, le produit de condensation possédant au moins une fonction amine tertiaire ; et
(ii) d'un agent de quaternisation comprenant des sulfates de dialkyle, des halogénures de benzyle, des carbonates à substitution hydrocarbonée; des époxydes à substitution hydrocarbonée en combinaison avec un acide ou des mélanges de ceux-ci.

**5.** Utilisation selon la revendication 4, dans laquelle l'agent d'acylation à substitution hydrocarbonée est l'anhydride polyisobutylène succinique et le composé comportant un atome d'oxygène ou d'azote capable de condenser ledit agent d'acylation est choisi parmi la diméthylaminopropylamine, la N-méthyl-1,3-diaminopropane, la N,N-diméthylaminopropylamine, la N,N-diéthylaminopropylamine, la N,N-diméthylaminoéthylamine, la diéthylènetriamine, la dipropylènetriamine, la dibutylènetriamine, la triéthylènetetraamine, la tetraéthylènepentaamine, la pentaéthylènehexaamine, l'hexaméthylènetetraamine et la bis(hexaméthylène)triamine.

**6.** Utilisation selon la revendication 2 à 5, dans laquelle l'additif détergent oxygéné est un composé polyisobutylène comportant un groupe de tête anhydride succinique ou acide succinique.

**7.** Utilisation selon l'une quelconque des revendications précédentes, dans laquelle la taille moyenne $\overline{D}_{DRX}$ des particules est inférieure ou égale à 8 nm.

**8.** Utilisation selon l'une quelconque des revendications précédentes, dans laquelle la phase organique de la dispersion est à base d'un hydrocarbure apolaire.

**9.** Utilisation selon l'une quelconque des revendications précédentes, dans laquelle l'agent amphiphile est un acide carboxylique qui comporte généralement de 10 à 50 atomes de carbone, de préférence de 10 à 25 atomes de carbone.

**10.** Utilisation selon l'une quelconque des revendications précédentes, dans laquelle au moins 80% en nombre des particules présentent une taille $D_{MET}$ inférieure ou égale à 12 nm mesurée par microscopie en transmission, plus particulièrement inférieure ou égale à 8 nm.

**11.** Utilisation selon l'une quelconque des revendications précédentes, dans laquelle les particules possèdent un diamètre médian $\Phi_{50}$ compris de préférence entre 3 nm et 12 nm, et plus particulièrement entre 4 nm et 10 nm.

**12.** Utilisation selon l'une quelconque des revendications précédentes, dans laquelle les objets solides de l'invention présentent un diamètre hydrodynamique $D_h$ inférieur ou égal à 50 nm, de préférence inférieur ou égal à 30 nm, préférentiellement inférieur ou égal à 20 nm, avantageusement inférieur ou égal à 16 nm, mesuré par diffusion dynamique de la lumière.

**13.** Utilisation selon l'une quelconque des revendications précédentes, dans laquelle le rapport molaire entre le nombre de moles d'agent amphiphile et le nombre de moles de fer est compris de 0,2 à 1, préférentiellement comprise de 0,2 à 0,8.

**14.** Utilisation selon l'une quelconque des revendications précédentes, dans laquelle la teneur en fer est comprise entre 0,05 % et 25%, plus particulièrement entre 2% et 15%, cette concentration étant exprimée en % poids de fer métal par rapport au poids total de ladite composition.

## Patentansprüche

**1.** Verwendung einer Zusammensetzung umfassend eine Dispersion und ein Detergens umfassend ein quartäres Ammoniumsalz, wobei die Dispersion umfasst:

- eine organische Phase;
- mindestens ein amphiphiles Mittel, und
- feste Objekte, die in der organischen Phase dispergiert sind, in Form individualisierter Teilchen oder Aggregaten von Teilchen, bestehend aus einer Eisenverbindung in kristallisierter Form, wobei die Teilchen eine durchschnittliche Größe $\overline{D}_{DRX}$ von kleiner als oder gleich 12 nm aufweisen, gemessen durch Röntgenbeugung,

als Kraftstoffadditiv für Verbrennungsmotoren, um die Regeneration eines FAP zu unterstützen.

**2.** Verwendung gemäß Anspruch 1, wobei die Zusammensetzung des Weiteren ein oxygeniertes Detergensadditiv umfasst.

**3.** Verwendung gemäß einem der Ansprüche 1 oder 2, wobei das quartäre Ammoniumsalz das Reaktionsprodukt umfasst:

(i) mindestens einer Verbindung, die umfassen kann:

(a) das Produkt der Kondensation eines Kohlenwasserstoff-substituierten Acylierungsmittels und einer Verbindung umfassend ein Sauerstoff- oder Stickstoffatom, welches in der Lage ist, das Acylierungsmittel zu kondensieren, wobei das Kondensationsprodukt mindestens eine tertiäre Aminfunktionalität aufweist;
(b) ein Polyalken-substituiertes Amin mit mindestens einer tertiären Aminfunktionalität; und
(c) ein Mannich-Reaktionsprodukt mit mindestens einer tertiären Aminfunktionalität, wobei das Produkt der Mannich-Reaktion von einem Kohlenwasserstoff-substituierten Phenol, einem Aldehyd und einem Amin abgeleitet ist; und

(ii) eines Quaternisierungsmittels, welches geeignet ist, die tertiären Aminfunktionalität der Verbindung (i) in quartären Stickstoff zu überführen.

**4.** Verwendung gemäß einem der Ansprüche 1 oder 2, wobei das quartäre Ammoniumsalz das Reaktionsprodukt umfasst:

(i) eines Produktes der Kondensation eines Kohlenwasserstoff-substituierten Acylierungsmittels und einer Verbindung mit einem Sauerstoff- oder Stickstoffatom, welches in der Lage ist, das Acylierungsmittel zu kondensieren, wobei das Kondensationsprodukt mindestens eine tertiäre Aminfunktionalität aufweist; und
(ii) eines Quaternisierungsmittels umfassend Dialkylsulfate, Benzylhalogenide, Kohlenwasserstoff-substituierte Carbonate; Kohlenwasserstoff-substituierte Epoxide in Kombination mit einer Säure oder Mischungen davon.

**5.** Verwendung gemäß Anspruch 4, wobei das Kohlenwasserstoff-substituierte Acylierungsmittel Polyisobutylenbernsteinsäureanhydrid ist und die Verbindung umfassend ein Sauerstoff- oder Stickstoffatom, welches in der Lage ist, das Acylierungsmittel zu kondensieren, ausgewählt ist aus Dimethylaminopropylamin, N-Methyl-1,3-diaminopropan, N,N-Dimethylaminopropylamin, N,N-Diethylaminopropylamin, N,N-Dimethylaminoethylamin, Diethylentriamin, Dipropylentriamin, Dibutylentriamin, Triethylentetraamin, Tetraethylenpentaamin, Pentaethylenhexaamin, Hexamethylentetraamin und Bis(hexamethylen)triamin.

**6.** Verwendung gemäß Anspruch 2 bis 5, wobei das oxygenierte Detergensadditiv eine Polyisobutylen-Verbindung mit einer Bernsteinsäureanhydrid- oder Bernsteinsäure-Kopfgruppe ist.

**7.** Verwendung gemäß einem der voranstehenden Ansprüche, wobei die durchschnittliche Größe $\overline{D}_{DRX}$ der Teilchen

kleiner als oder gleich 8 nm ist.

**8.** Verwendung gemäß einem der voranstehenden Ansprüche, wobei die organische Phase der Dispersion auf einem apolaren Kohlenwasserstoff basiert.

**9.** Verwendung gemäß einem der voranstehenden Ansprüche, wobei das amphiphile Mittel eine Carbonsäure ist, die im Allgemeinen von 10 bis 50 Kohlenstoffatome, vorzugsweise von 10 bis 25 Kohlenstoffatome umfasst.

**10.** Verwendung gemäß einem der voranstehenden Ansprüche, wobei mindestens 80 % der Anzahl der Teilchen eine $D_{MET}$ -Größe von kleiner als oder gleich 12 nm, insbesondere kleiner als oder gleich 8 nm aufweisen, gemessen mittels Transmissionsmikroskopie.

**11.** Verwendung gemäß einem der voranstehenden Ansprüche, wobei die Teilchen einen mittleren Durchmesser $\Phi_{50}$ zwischen vorzugsweise 3 nm und 12 nm, und insbesondere zwischen 4 nm und 10 nm aufweisen.

**12.** Verwendung gemäß einem der voranstehenden Ansprüche, wobei die festen Objekte der Erfindung einen hydrodynamischen Durchmesser $D_h$ von kleiner als oder gleich 50 nm, vorzugsweise kleiner als oder gleich 30 nm, noch bevorzugter kleiner als oder gleich 20 nm, vorteilhaft kleiner als oder gleich 16 nm aufweisen, gemessen mittels dynamischer Lichtstreuung.

**13.** Verwendung gemäß einem der voranstehenden Ansprüche, wobei das molare Verhältnis zwischen der Molzahl des amphiphilen Mittels und der Molzahl des Eisens zwischen 0,2 und 1, vorzugsweise zwischen 0,2 und 0,8 liegt.

**14.** Verwendung gemäß einem der voranstehenden Ansprüche, wobei der Gehalt an Eisen zwischen 0,05 % und 25 %, insbesondere zwischen 2 % und 15 % liegt, wobei diese Konzentration in Gewichtsprozent metallischen Eisens, bezogen auf das Gesamtgewicht der Zusammensetzung, ausgedrückt wird.

**Claims**

**1.** Use of a composition comprising a dispersion and a detergent comprising a quaternary ammonia salt, said dispersion comprising:

- an organic phase;
- at least one amphiphilic agent, and
- solid objects dispersed in the organic phase, in the form of individualized particles or particle aggregates, consisting of an iron compound in crystallized form, such that said particles have an average size $\overline{D}_{XRD}$ of less than or equal to 12 nm as measured by X-ray diffraction,

as a fuel additive for internal combustion engines for assisting with regeneration of the PF.

**2.** The use according to claim 1, further comprising an oxygenated detergent additive.

**3.** The use according to any of claims 1 or 2, wherein the quaternary ammonia salt comprises the reaction product:

(i) of at least one compound which may comprise:

(a) the condensation product of an acylation agent with hydrocarbon substitution and of a compound comprising an oxygen or nitrogen atom capable of condensing the acylation agent, the condensation product having at least one tertiary amine function;
(b) an amine with polyalkene substitution comprising at least one tertiary amine function; and
(c) a Mannich reaction product comprising at least one tertiary amine function, the Mannich reaction product being derived from a phenol with hydrocarbon substitution, from an aldehyde and from an amine; and

(ii) of a suitable quaternization agent for converting the tertiary amine function of the compound (i) into a quaternary nitrogen.

**4.** The use according to any of claims 1 or 2, wherein the quaternary ammonium salt comprises the product of the reaction:

(i) of the condensation product of an acylation agent with hydrocarbon substitution and of a compound comprising an oxygen or nitrogen atom capable of condensing the acylation agent, the condensation product having at least one tertiary amine function; and
(ii) of a quaternization agent comprising dialkyl sulfates, benzyl halides, carbonates with hydrocarbon substitution, epoxides with hydrocarbon substitution in combination with an acid or mixtures thereof.

**5.** The use according to claim 4, wherein the acylation agent with hydrocarbon substitution is succinic polyisobutylene anhydride and the compound including an oxygen or nitrogen atom capable of fusing said acylation agent is selected from dimethylaminopropylamine, N-methyl-1,3-diaminopropane, N,N-dimethylaminopropylamine, N,N-diethylaminopropylamine, N,N-dimethylaminoethylamine, diethylenetriamine, dipropylenetriamine, dibutylenetriamine, triethylenetetraamine, tetraethylenepentaamine, pentaethylenehexaamine, hexamethylenetetraamine and bis(hexamethylene)triamine.

**6.** The use according to any of claims 2 to 5, wherein the oxygenated detergent additive is a polyisobutylene compound including a succinic anhydride or succinic acid head group.

**7.** The use according to any of the preceding claims, wherein the average size $\overline{D}_{XRD}$ of the particles is less than or equal to 8 nm.

**8.** The use according to any of the preceding claims, wherein the organic phase of the dispersion is based on an apolar hydrocarbon.

**9.** The use according to any of the preceding claims, wherein the amphiphilic agent is a carboxylic acid which generally includes from 10 to 50 carbon atoms, preferably from 10 to 25 carbon atoms.

**10.** The use according to any of the preceding claims, wherein at least 80% by number of the particles have a size $D_{TEM}$ of less than or equal to 12 nm as measured by transmission microscopy, more particularly less than or equal to 8 nm.

**11.** The use according to any of the preceding claims, wherein the particles have a median diameter $\Phi_{50}$ preferably comprised between 3 nm and 12 nm, and more particularly between 4 nm and 10 nm.

**12.** The use according to any of the preceding claims, wherein the solid objects of the invention have a hydrodynamic diameter $D_h$ of less than or equal to 50 nm, preferably less than or equal to 30 nm, preferentially less than or equal to 20 nm, advantageously less than or equal to 16 nm, as measured by dynamic light scattering.

**13.** The use according to any of the preceding claims, wherein the molar ratio between the number of moles of amphiphilic agent and the number of moles of iron is comprised from 0.2 to 1, preferentially comprised from 0.2 to 0.8.

**14.** The use according to any of the preceding claims, wherein the iron content is comprised between 0.05 % and 25%, more particularly between 2% and 15%, this concentration being expressed in % by weight of iron metal based on the total weight of said composition.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2008116552 A1
- WO 2009140190 A1
- WO 2003053560 A
- US 4253980 A
- US 3778371 A
- US 4171959 A
- US 4326973 A
- US 4338206 A
- US 5254138 A
- US 3598738 A
- US 4026809 A
- US 4032700 A
- US 4137185 A
- US 4156061 A
- US 4320019 A
- US 4357250 A
- US 4658078 A
- US 4668834 A
- US 4937299 A
- US 5324800 A
- US 5071919 A
- US 5137978 A
- US 5137980 A
- US 5286823 A
- US 5408018 A
- US 6562913 B
- US 6683138 B
- US 7037999 B
- US 20040176552 A1
- US 20050137363 A
- US 20060079652 A1
- US 3361673 A
- US 3401118 A
- US 3087436 A
- US 3172892 A
- US 3272746 A
- US 3215707 A
- US 3231587 A
- US 3912764 A
- US 4110349 A
- US 4234435 A
- US 6077909 A
- US 6165235 A
- US 5739356 A
- US 5777142 A
- US 5786490 A
- US 5856524 A
- US 6020500 A
- US 6114547 A
- US 5840920 A
- US 6147036 A
- US 6207839 B
- US 3954808 A
- US 5336278 A
- US 5458793 A
- US 5620949 A
- US 5827805 A
- US 6001781 A
- US 5912213 A
- US 5851966 A
- US 5885944 A
- US 3275554 A
- US 3438757 A
- US 3454555 A
- US 3565804 A
- US 3755433 A
- US 3822289 A
- US 5567845 A
- US 5496383 A
- US 5350429 A
- US 5492641 A
- US 4832702 A
- US 5697988 A
- US 5876468 A
- US 3219666 A
- WO 2006063161 A2


### Littérature non-brevet citée dans la description


- Ethylene Amines. Encyclopedia of Chemical Technology, Kirk et Othmer. Interscience Publishers, 1950, vol. 5, 898-905